# EUROPEAN PATENT SPECIFICATION

(11) **EP 0 846 298 B1**
(45) Date of publication and mention of the grant of the patent: **18.05.2005**
(21) Application number: 96927417.4
(22) Date of filing: 14.08.1996
(51) Int. Cl.: G06F 17/30, G06F 17/60, G06G 7/52

(54) **ELECTRONIC DOCUMENT AND DATA STORAGE AND RETRIEVAL SYSTEM**
ELEKTRONISCHES SPEICHER- UND WIEDERGABESYSTEM FÜR DOKUMENTE UND DATEN
SYSTEME DE STOCKAGE ET RESTITUTION DE DOCUMENTS ET DONNEES ELECTRONIQUES

(30) Priority: 15.08.1995 US 2375 P; 02.04.1996 US 626600
(43) Date of publication of application: 10.06.1998
(73) Proprietor: CITIBANK, N.A., New York, New York 10043 (US)
(72) Inventor: QUINN, Michael, F., Pound Ridge, NY 10576 (US); MCGINLAY, James, Staten Island, NY 10314 (US); KADRON, Roman, Greenwich, CT 06831 (US)
(74) Representative: Cooper, John
(86) International application number: PCT/US1996/013191
(87) International publication number: WO 1997/007468

(56) References cited:
- EP-A- 0 532 796
- FR-A- 2 595 487
- US-A- 4 918 646
- US-A- 5 159 667
- US-A- 5 168 444
- US-A- 5 170 466
- US-A- 5 235 433
- US-A- 5 490 217
- ACCOUNTANCY, issued February 1995, A. ETHERINGTON, "The DIP Alternative", pages 60 and 62.
- NUCLEAR PLANT JOURNAL, issued July-August 1991, T. REDING, "Digital Imaging Technology: What, Where and Why in Commercial Nuclear Power", pages 89, 90 and 94.
- IMC JOURNAL 1, January-February 1989, D. BLACK, "The New Breed of Mixed-Media Image Management Systems", pages 9-13.
- MICROGRAPHICS & VIDEO TECHNOLOGY, Vol. 4, No. 1, 1985, G. WALTER, "Optical Digital Data Disk Systems for the Management and Dissemination of Office and Engineering Documents", pages 21-30.

## Description

### NOTICE OF COPYRIGHTED MATERIAL IN DISCLOSURE

A portion of the disclosure of this patent document contains material that is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### FIELD OF THE INVENTION

This invention relates to a system for managing information pertaining to financial transactions, particularly international transactions such as transactions involving letters of credit, guarantees, import collections, export direct collections and export collections.

### BACKGROUND OF THE INVENTION

Letters of credit are issued and advised by a financial institution, such as a bank, on behalf of a customer to give the beneficiary a right to draw upon the issuing financial institution upon the presentation of papers or documents as stipulated between the financial institution and the customer. Commercial or documentary letters of credit are used principally to finance the shipment of merchandise. Such letters of credit require the beneficiary to present such documents as bills of lading, insurance certificates, commercial invoices and so forth, before drafts can be honored or payments realized under the letter of credit.

It is known to process transactions involving letters of credit on a local processing system. However, any inquiries or investigations concerning the transaction generally require reference to a "hard copy" or original, paper letter of credit files for details of the transaction. These files typically include all paper documents involved in a transaction, such as messages sent by telex or SWIFT, any bills of lading or certificates of origin, and any other documents associated with the transaction. Generally, this information is maintained manually and stored in file cabinets under a conventional indexing system. Thus, when inquiries or investigations are received, a representative must physically remove the folders from the manual storage area for use in processing the inquiry.

Using such conventional systems, files are frequently lost or misplaced. As a result, inquiries by customers may not be addressed expeditiously. This, in turn, may lead to customer dissatisfaction and loss of business by the financial institution. Moreover, employee time spent tracking down misplaced files also results in a cost to the financial institution.

As a safeguard against loss of paper files, it is known in the art to reproduce files onto microfiche. While adequately serving as a fall-back when files are lost, microfiche copies are somewhat time consuming to work with since they require reproduction of the archived papers.

In view of these limitations, there is a need to provide a system for storing and tracking letter of credit transactions that is less time-consuming, less costly, less error-prone, and more convenient than prior art systems. More specifically, there remains a need for a system and process to automate the paper intensive workflow, while maintaining a high degree of information integrity and customer responsiveness.

EP-A-0,532,796 teaches a multifunctional data processing system comprising a host computer, a multifunctional local processing device such as a fax/printer, a control module, preferably a self-contained plug-in printed circuit board or card, and a remote device. This prior art document is based on providing a single apparatus or device which is capable of functioning in conjunction with a host computer for scanning, faxing printing and copying a document.

### SUMMARY OF THE INVENTION

It is an object of the invention to overcome the above described limitations and others by providing a system and process for storing related documents, messages, and customer inquires as electronic images for retrieval in a controlled and secure manner to be used in connection with financial transactions, particularly international transactions such as transactions involving letters of credit, guarantees, import collections, export direct collections and export collections.

This objective is achieved by the system and process of the present invention as defined in Claims 1 and 14.

The invention is based on providing electronic storage at one or more regional processing centers and providing for retrieval of documents across a wide area network that connects each regional processing center with its client customer service units. The system is centrally maintained, and provides the capability to manage and integrate different forms of information among multiple remote offices. Information is treated as transaction related items and are linked together by transaction folders.

The trade records information management system of the present invention stores related documents, messages, and customer inquiries as electronic images and allows users to retrieve these images in a controlled and secure manner. In broad terms, the system is an information repository for all the trade financing transactions for each region of a bank's trade finance divisions. The present invention provides a bank with the capability to manage and integrate different forms of information among remote offices to enhance employee productivity and work quality.

The information to be stored and linked together in the trade records information management system of the present invention may come from multiple sources in multiple forms and is delivered to multiple locations. The information may consist of mail, FAX, SWIFT, TELEX, and user input. (SWIFT and TELEX are captured by external systems and stored with the trade records information management system of the present invention). Documents can be presented at any of the service or processing facilities.

All information related to a particular transaction is linked in the trade records information management system of the present invention by the creation of transaction folders. The system preferably maintains an internal unique key identifier to identify each folder and document with the image transaction ID number unique to each item when available from the image management system. For serving customer inquiries, transaction folders can be accessed by customer service representatives at network locations.

One significant preferred aspect of the trade records information management system of the present invention is that users may define what documents are placed into what folders. Certain information is maintained on the folder level and is the same for all documents. Other than the internal unique key, however, there is no restriction on duplicate field references.

Processing of the documents in the transaction folders is preferably performed by assigning the folders to trade service representatives (TSR's) based on rules defined by the system administrator. Each TSR or processor has a work queue in the trade records information management system of the present invention containing documents and customer inquiries to process. Simulating an in-box and desktop, the trade records information management system of the present invention provides the trade service representative (TSR) with a single point of reference to all data related to any letter of credit, reimbursement, collection, or guarantee. In addition, a trade service representative's work-in-process can be viewed by supervisors or operations heads at any time to monitor the backlog and assigned levels of work. The system automatically "ages" pending and discrepant work to present in to Supervisors. Through a wide area network (WAN), all the trade records information data for a region is immediately available to users in that region, both locally and remotely. Archival storage may be provided through the use of optical disks in a jukebox storage system. The information is available indefinitely by retaining optical disk platters off-line. Off-line optical disk platters can be re-mounted in the jukebox via requests to the information management system. Viewing of documents that have been archived requires the document ID stored in an off-line file. Off-line archive files are created through an administration controlled process.

Another significant aspect of the trade records information management system of the present invention is that database access is streamlined by providing direct access to the relational database. Users will have most of the necessary information accessible at their desktop without the need to use other manual filing sources to retrieve needed information. Access to these transaction folders is available form an authorised location on the trade records information network of the present invention. System administrators however, may restrict user workstations to only retrieve images from the local storage devices.

The system and method of the present invention offers several distinct advantages over known trade records management systems that allow banks and other financial institutions to achieve a competitive advantage by offering faster turnaround of customer transactions and improved customer service. To begin with, it is possible to streamline and improve the workflow of the paper-based product delivery process and provide automated control of discrepant and in-process items. Moreover, the invention provides controlled and immediate access through images and indexes to the different forms of information about trade services financial transactions. This allows improved customer service by providing immediate access to all information on a specific financial transaction. The invention also reduces the amount of time trade services representatives (TSR's) and customer service representatives (CSR's) spend searching for and retrieving information by, replacing microfiche archiving and improving document organization of the current imaging systems.

### BRIEF DESCRIPTION OF THE DRAWINGS

A currently preferred embodiment of the system of the present invention will now be described with reference to the attached drawings in which:
FIG. 1 is an overview block diagram of the information management system in accordance with the invention.
FIG. 2 is a more detailed diagram of the information management system according to the invention.
FIG. 3 is a diagram showing the flow of incoming and outgoing data among components of the system of the invention.
FIG. 4 is a flow chart that illustrates the operation of the system startup from the operating system.
FIG. 5 is a flow chart that illustrates a process for allowing a user to select a new password.
FIG. 6 is a flow chart that continues the process of FIG. 5.
FIG. 7 is a flow chart that continues the process of FIG. 6.
FIG. 8 is a flow chart that illustrates a process for starting an index module with an index queue window.

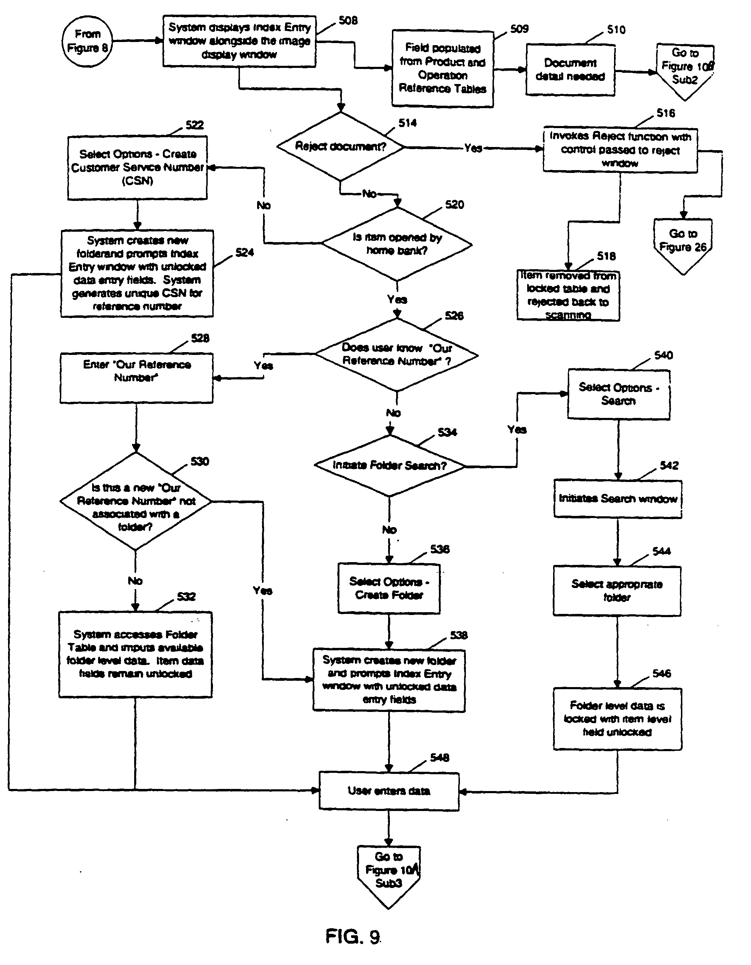

FIG. 9 is a flow chart that continues the process of FIG. 8.
FIGS. 10A and 10B are flow charts that continue the process of FIG. 9.
FIG. 11 is a flow chart that illustrates a document checking process.
FIG. 12 is a flow chart that continues the process of FIG. 11.
FIG. 13 is a flow chart that illustrates a process for displaying user status information to a trade service representative and/or a supervisor.
FIG. 14 is a flow chart that continues the process of FIG. 13.

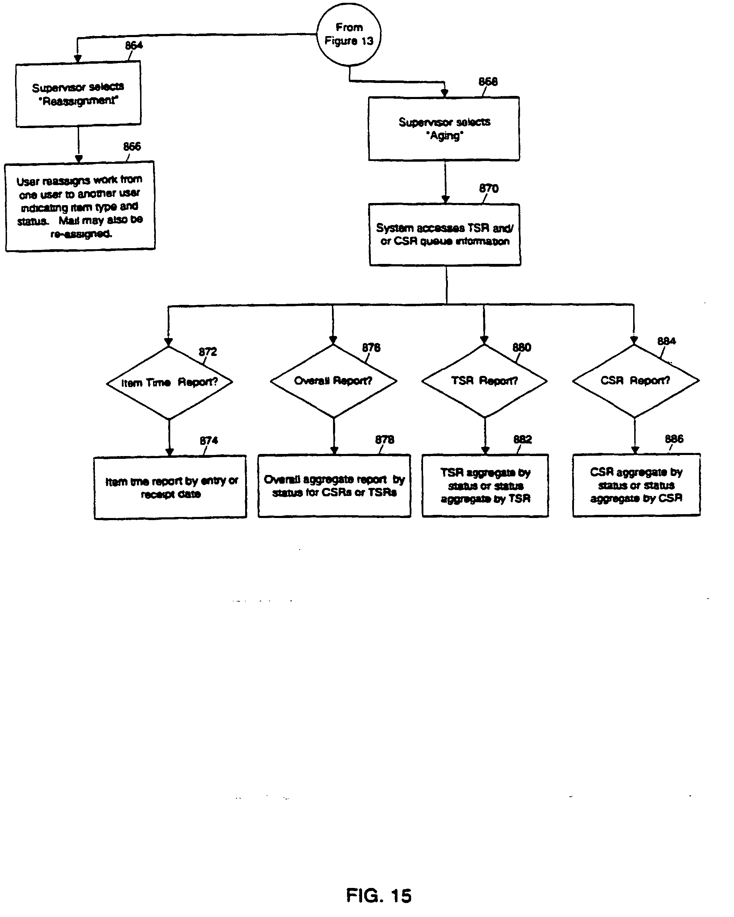

FIG. 15 is a flow chart that continues the process of FIG. 13.
FIG. 16 is a flow chart that illustrates a process for displaying information to a customer service representative.
FIG. 17 is a flow chart that illustrates a process for displaying information to a system administrator and a system controller.
FIG. 18 is a flow chart that continues the process of FIG. 17.
FIG. 19 is a flow chart that illustrates a process of scanning textual information for use in the system of the invention.
FIG. 20 is a flow chart that illustrates a process of inputting new inquiries into the system according to the invention.
FIG. 21 is a flow chart that illustrates a process for allowing users to enter information about a folder or a transaction in a folder to find a specific folder for viewing.
FIG. 22 is a flow chart that continues the process of FIG. 21 detailing the Folder Detail window.
FIG. 23 is a flow chart of a process for allowing users to users to pend items by inserting levels 1, 2, and 3 reasons.
FIG. 24 is a flow chart that illustrates a representative relationship between different types of tables used in the system according to the invention.

### DETAILED DESCRIPTION OF THE PREFERRED EMBODIMENTS

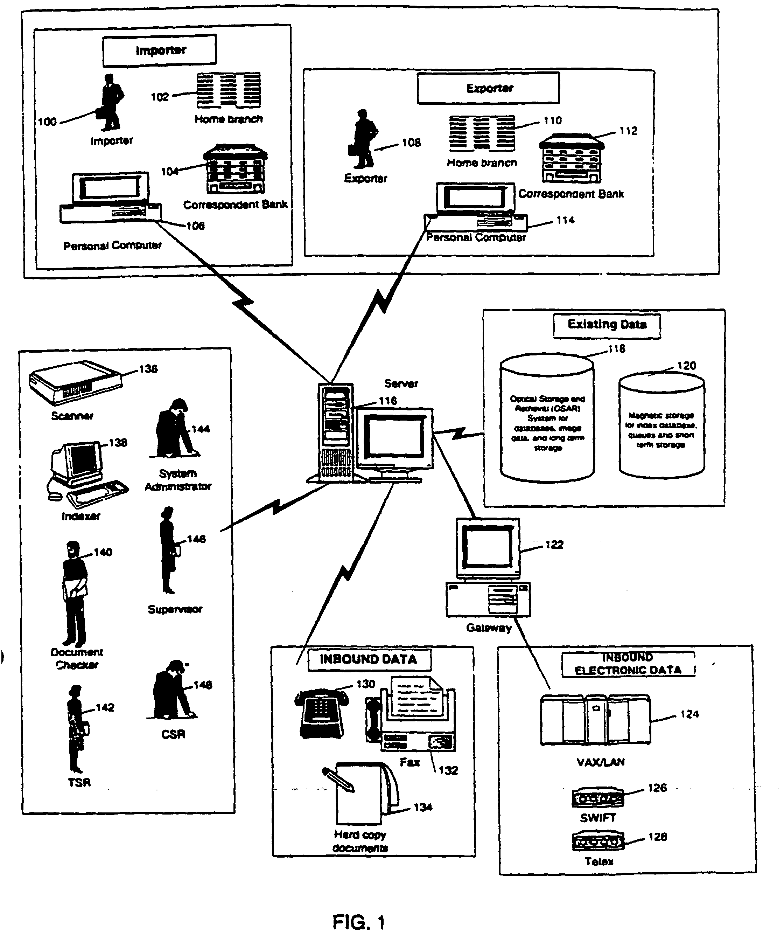

An information management system in accordance with the invention is broadly illustrated in FIG. 1. As shown therein, an importer 100 applies for a letter of credit, a reimbursement, a collection, or a guarantee through a home branch location 102 or a correspondent bank location 104. The appropriate requirements are transmitted (by a modem or the like) from a terminal, such as a personal computer 106, to a server 116 located remotely from the terminal. The server may be any suitable hardware device, but is preferably a general purpose computer such as an HP9000 model G90 server.

In the system shown, a "hard copy" 134 of the letter of credit, reimbursement, collection and/or guarantee may be transmitted by other means, such as by facsimile 132, over standard telephone lines. The information contained in the hard copy 134 may also be communicated by telephone 130. Information corresponding to a request for a letter of credit (L/C), a reimbursement, a collection, or a guarantee may also be communicated to the server 116, from a SWIFT 126, a VAX/LAN 124 or a TELEX 128 terminal via a gateway server 122.

Once received from any of the above-described means, the information is conveyed, for example, to an exporter 108 via a home branch 110 or a correspondent bank 112. As shown, this information is conveyed via a personal computer 114 that is in communication with the server 116, typically via modem.

The system includes means for inputting hard copy items into the system. A scanner 136 is preferably used for this purpose, but any other input device may also be used to input hard copy items into the system. Other items are obtained electronically or are generated internally. All items are indexed with an indexer 138, (at step 138), reviewed by a document checker 140, assigned to a transaction service representative 142, as defined by a system administrator and routing rules. The transaction service representative work flow is monitored by a Supervisor 146, and all customer inquiries are performed by the customer service representative 148.

The data received by the server can be stored in any convenient media. For example, short-term data and data for indexing and ques may be stored on a magnetic disk 120. Data used for long-term data and image data may be stored on an optical storage and retrieval system (OSAR) 118. The server supports the system and the image database, updates applications, and supports the gateway systems.

In accordance with the invention, the system maintains information pertaining to transactions in "transaction folders." The transaction folders created in the trade records information management system of the present invention contain all the components related to a particular trade services transaction, including images of hard copy documents including original documentation such as bills of lading, insurance certificates, commercial invoices and so forth. The transaction folders may also include messages and notations concerning customer inquiries. The transaction folders are a logical construct for linking individual documents and messages related to a single transaction. The trade records information database maintains an internal unique key attribute to identify each folder and document.

In accordance with one significant aspect of the trade records information management system of the present invention, users may define what documents are placed into what folders. Certain information is maintained on the folder level and is the same for all documents. Other than the internal unique key, however, there is no restriction on duplicate field references. Although this will allow multiple folders with the same reference number to be stored in the database, two reference numbers are unique for the system. On the folder level, the bank reference number is unique. In addition, where used, the local trade records management system transaction ID is unique to each item.

The transaction folder created in the trade records information management system of the present invention may contain all the physical input and output media associated with the transaction. This includes, where applicable, electronic messages, mail items, inquiry history records, user entered messages, and inbound fax messages.

Users have control over what documents are stored in each folder and are allowed to move documents between folders. Users are also allowed to update database information about a document while it is in their queue.

The central trade records information management system of the present invention provides centralized storage of primary images and database records at the regional processing center. This allows for easy administration and maintenance. Duplicate images may be distributed to the local trade records information management systems maintained at remote customer service units.

The trade records information management system of the present invention also includes means for local storage of frequently used reference data. This data is maintained using a database management system (DBMS). Reference data is maintained locally at remote customer service units to reduce network traffic.

The local trade records management system gateway serves as an interface between the local trade records management system and the central trade records information management system of the present invention systems. Images will be stored at the regional processing center in a information management system and at remote customer service units via an image repository. The gateway will handle inbound and outbound image conversion. The local trade records management system gateway will handle communications between the customer service unit and regional processing center.

The system includes a gateway to automatically update database records with a bank reference number when it is assigned and remove the item from the trade service representative (TSR) work queue. A flag on the document record indicates if the user may close the item or if the item is closed by an automatic feed from the transaction processing system.

The update application will read a flat file that is transmitted to the central trade records information management system of the present invention server via a network data mover (NDM) from the system. The flat file will contain a local trade records management system ID and a bank reference number for transactions processed during the business day. The update program is run nightly.

The trade records information management system of the present invention will operate on Local Area Networks (LAN) at each site that are connected via a TCP/IP network. Depending on the capacity of the network, it might be advisable to limit image traffic across the network to batch transmissions between the local trade records management system and the central trade records information management system. However, where network capacity permits, it is preferably to allow direct access of images from the central trade records information management system. Data will traverse the network via structured query language (SQL) requests from the clients to the central trade records information management system of the present invention server at the regional processing center. The system preferable includes a graphic SQL interference to allow use by users not experienced in structured query language.

The trade records information management system of the present invention is based on several open architectures that will allow a bank to expand the application by adding additional servers, increasing processing power in existing servers, distributing data and images to remote sites, and the like.

The trade records information management system of the present invention is designed to be flexible in work assignment. Routing rules can be implemented to change workflow from one module to another or one user group to another with minimal or no application modifications. New queues can be created by the system support team by inheriting characteristics from an existing queue class and adding unique queue characteristics.

The system includes means for inputting hard copy items into the system. A scanner 136 is preferably used for this purpose, but any other input device may also be used to input hard copy items into the system. Other items are obtained electronically or are generated internally. All items are indexed with an indexer 138, (at step 138), reviewed by a document checker 140, assigned to a transaction service representative 142, as defined by a system administrator and routing rules. The TSR work flow is monitored by a Supervisor 146, and all customer inquiries are performed by the customer service representative 148.

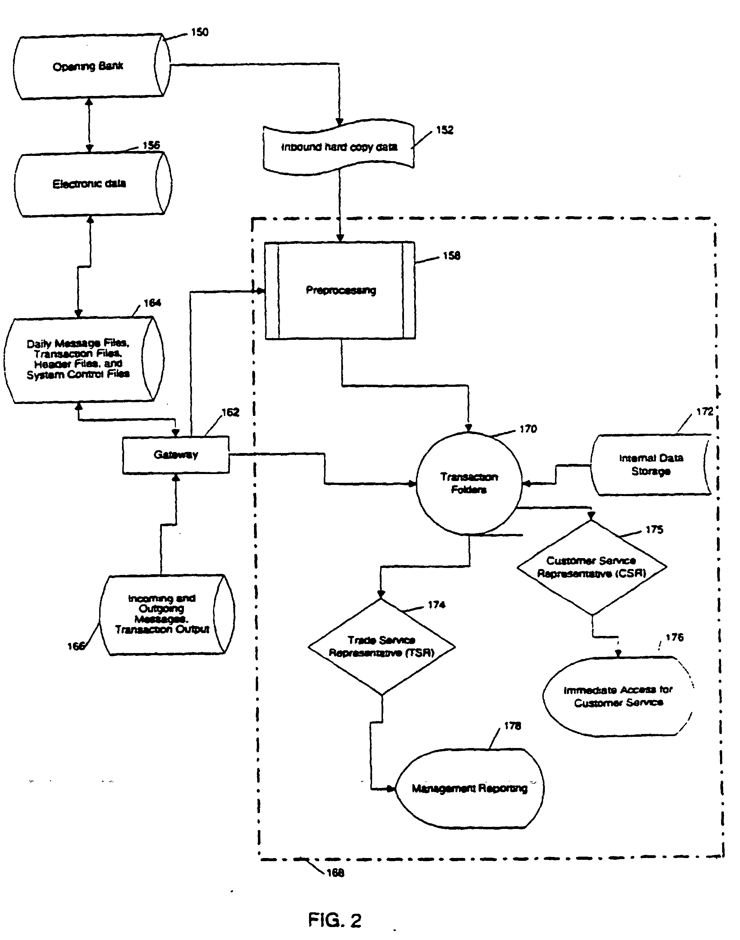

FIG. 2 illustrates data flow between the system and peripheral devices outside the system. Everything within the dotted line labeled 168 represents features of the system that interact with systems external to the information management system, which are shown outside the boundaries of the dotted line 168. When an opening bank 150, (for example an importer's home branch bank or a correspondent bank) initiates a transaction, transaction information is sent as either electronic data 156 (such as in SWIFT or telex format), or as a hard copy 152, (such as by mail or facsimile). Other data, such as daily message files, transaction files, header files, and system control files 164 are sent electronically to a gateway server 162 maintained at a regional processing center (RPC). Incoming and outgoing messages and transaction outputs 166 are also sent through the gateway 162.

If inbound hard copy data or electronic data from the gateway 162 require indexing, preprocessing is performed at step 158. After the preprocessing is performed at step 158, the data is sent to the transaction folders 170. Items that have already been associated with a folder identification are directly sent to the transaction folders 170.

More particularly, for inbound hard copy data 152, each document (item) is sent to preprocessing 158 for scanning, indexing, and review. Once the review is complete, the item is saved into a particular transaction folder or a new transaction folder is created. If there is an existing folder, internal data 172 from OSAR or the magnetic disks is used to update the folder. The system of the present invention also includes means that allow the transaction service representative 174 to manage the transaction from initiation to completion, and to permit the CSR 175 to handle customer service inquiries 176. In the currently preferred embodiment these means are specially programmed general purpose computers and telecommunication equipment, but any means that allows the transaction service representative and CSR to perform their respective functions could be used. Those skilled in the art will appreciate that several different types of reports can be prepared using the system databases 178.

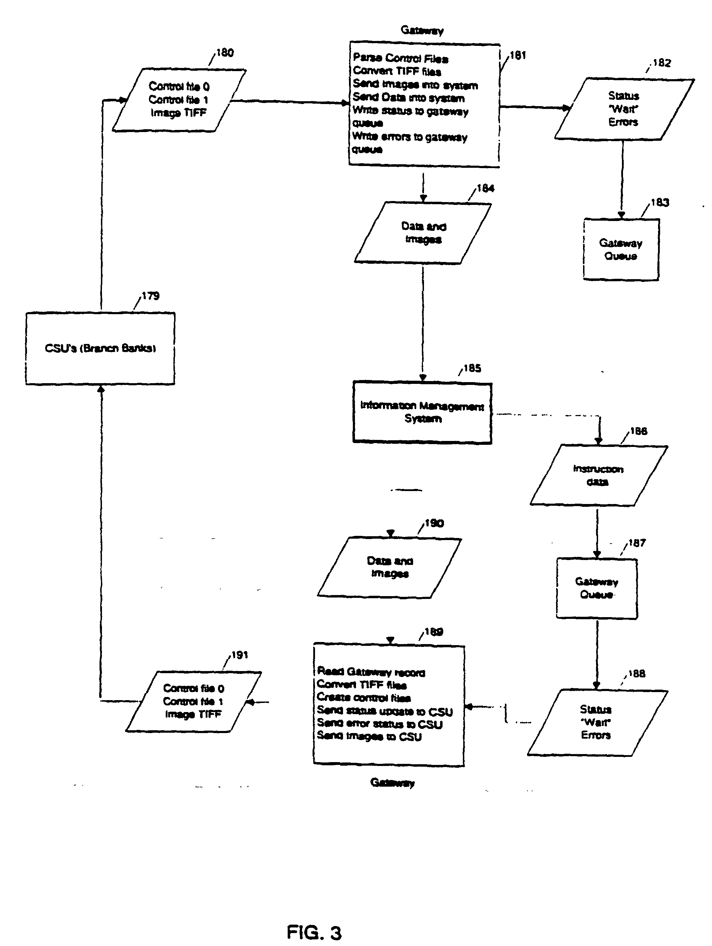

FIG. 3 diagrams in greater detail the interaction of the gateway 162 of FIG. 2. Incoming data from the customer service units 179 represented in solid lines consist of control files and image files. The image files are stored in a tagged-image-file-format (TIFF) format (a standard that defines a format in which graphic images are stored on a disk). The data records relating to the images are stored in control files 180. The gateway at the regional processing center 181 passes the control files, converts the image files, writes status and errors 182 to a gateway queue 183, and sends the data and images 184 to the information management system 185 for data management. The gateway and the information management system functions insert a record into the gateway queue when a system action must be correspondingly performed at the customer service unit.

For outgoing instructional information, the gateway 189 reads the gateway queue records 187 to determine the action to be taken. This action, sent by the information management system 185, may be instructions 186, preparations, or status data 188 stored in the gateway queue that need to be communicated with the customer service unit 179. For outgoing data and images from the information management system, the gateway converts the TIFF image files and creates control files 191, and sends the images electronically to the customer service unit 179.

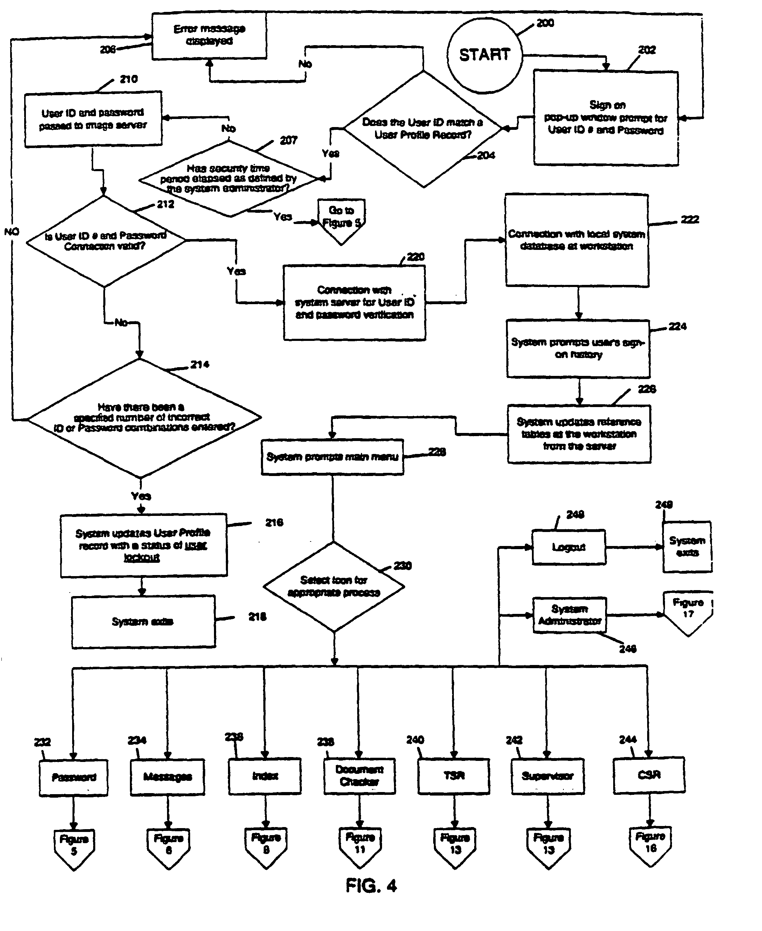

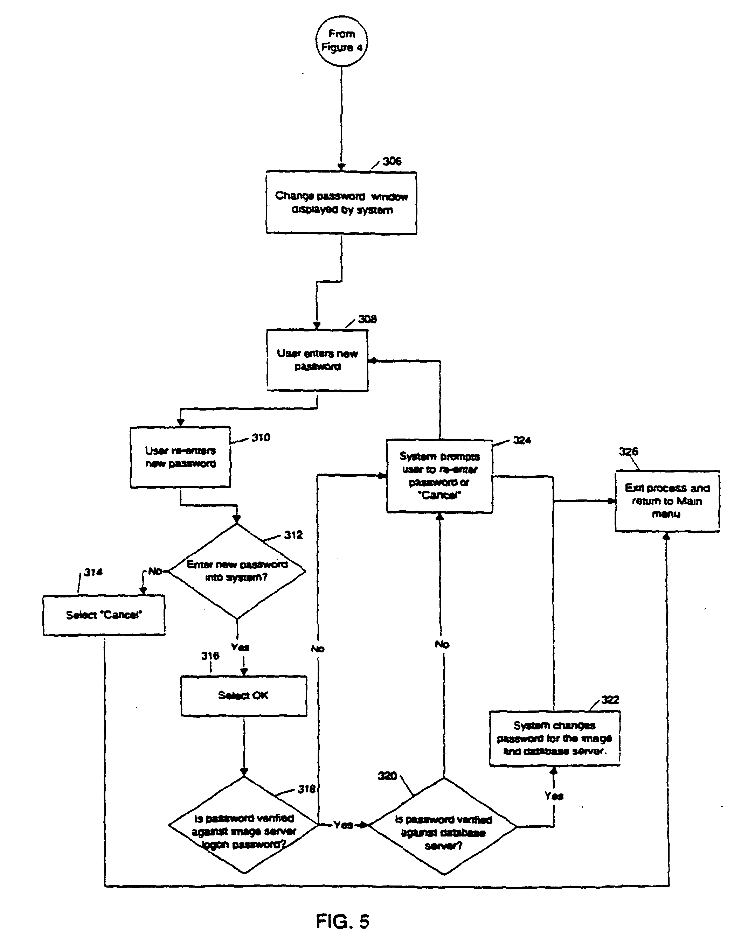

The operation of the information management system diagramed in FIG. 1 is illustrated starting with FIG. 4 at step 200. The program manager awaits selection of the system. After selection, the sign-on window prompts the user to enter their user ID number and password at step 202. If the user ID number does not correspond to that which is stored in a user profile record (at step 204) the system displays an error message 206 and returns to the sign on window 202.

If the user ID number matches a user profile record, then the system verifies whether the security time period as defined by the system administrator (at step 207) has elapsed. If the time period has elapsed, then the system forces the user to change their password (at step 232). If the time period has not elapsed, then the user ID number and password is passed to the image server by the system (210). If the image server does not verify the user ID number and password connection (at step 212) and there have not been a specified number of incorrect inputs (at step 214), then the system displays an error message (at step 206), and returns to the sign on window (at step 202). If the user has exceeded the specified number of incorrect inputs (at step 214), then the system updates the user profile record with a status of lockout (at step 216) and the system exits (at step 218). The lockout status can only be unlocked by the system administrator as shown at step 246.

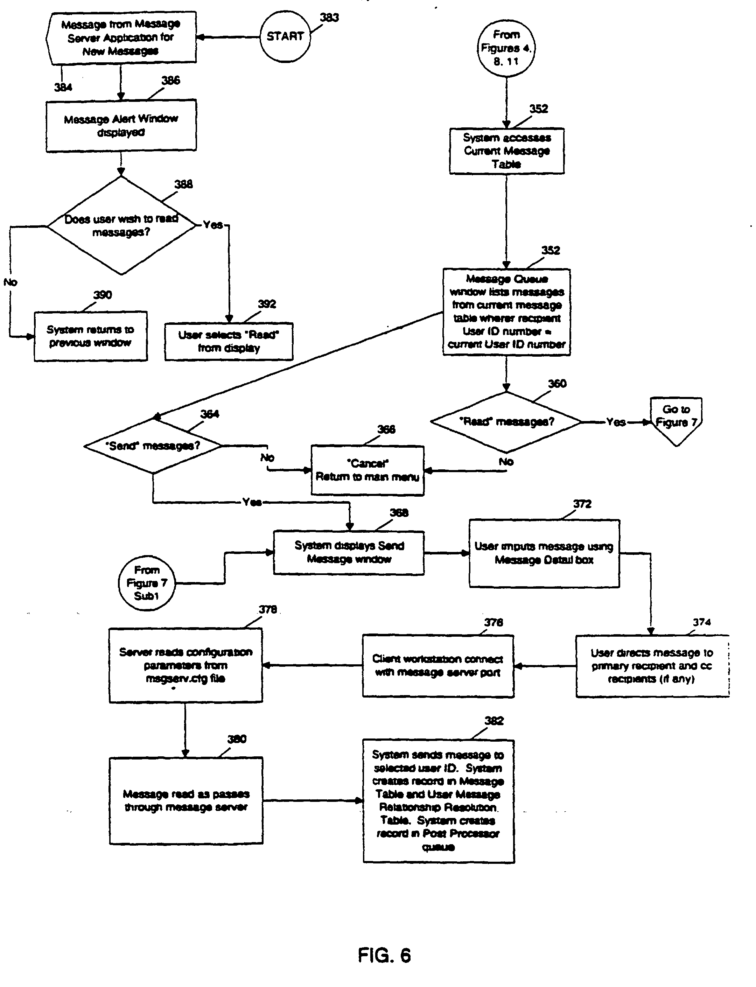

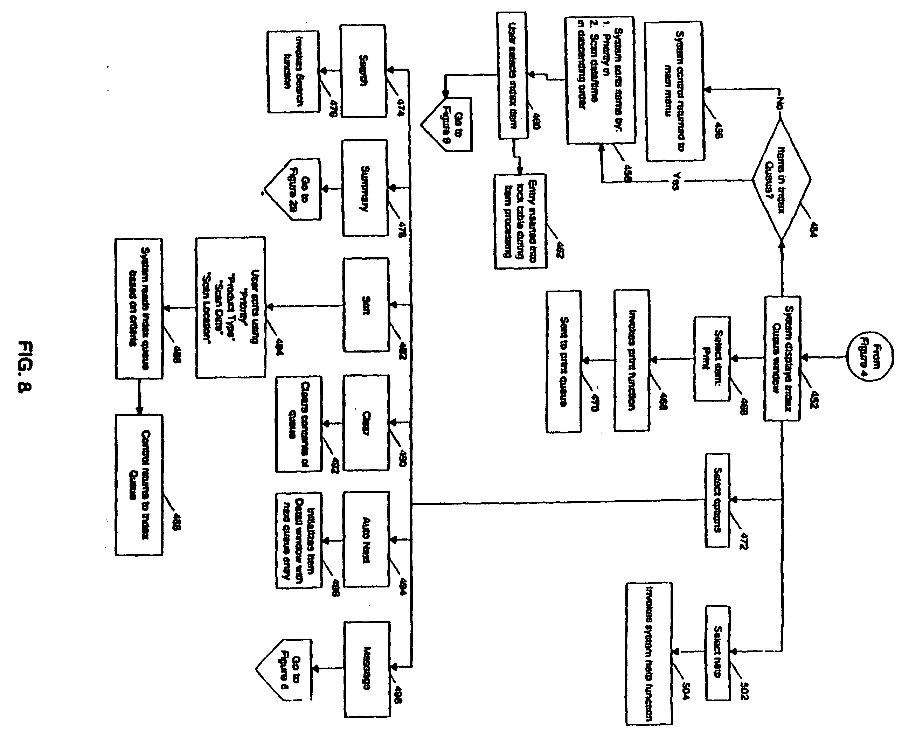

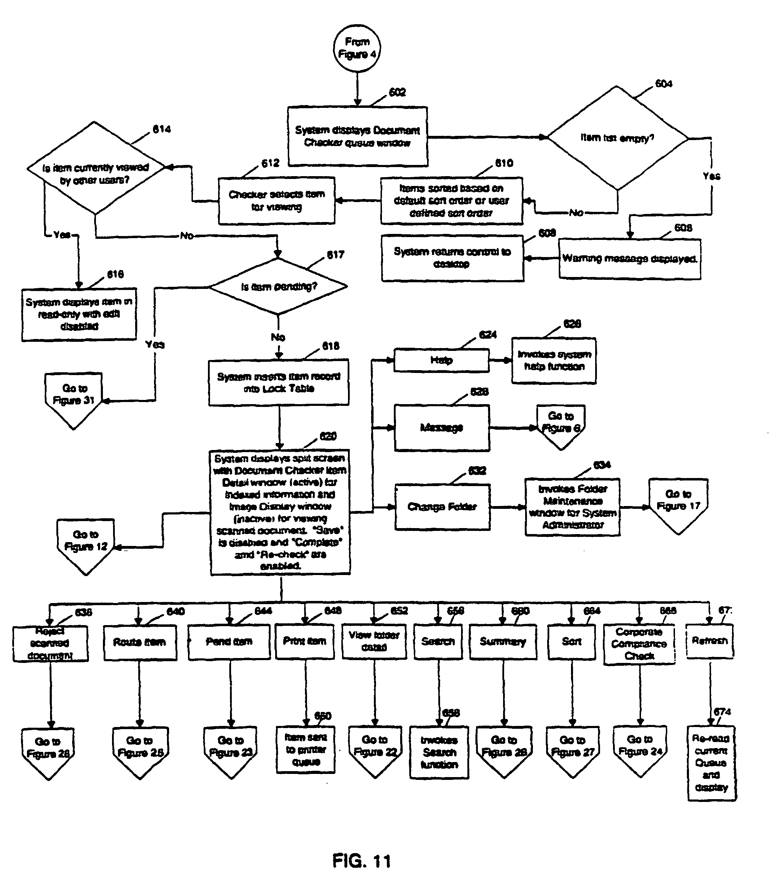

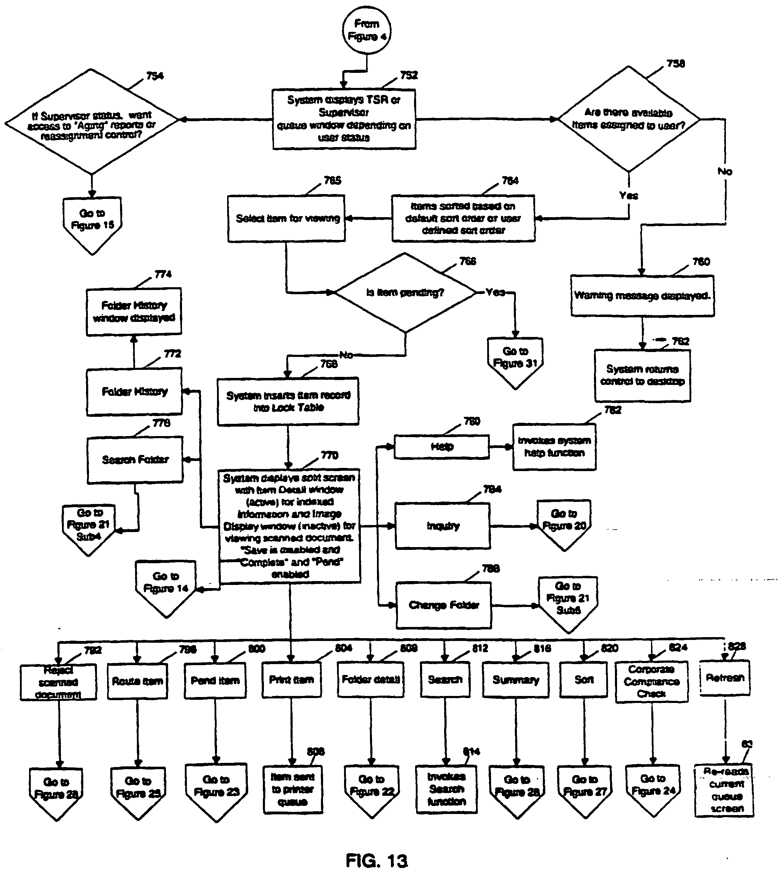

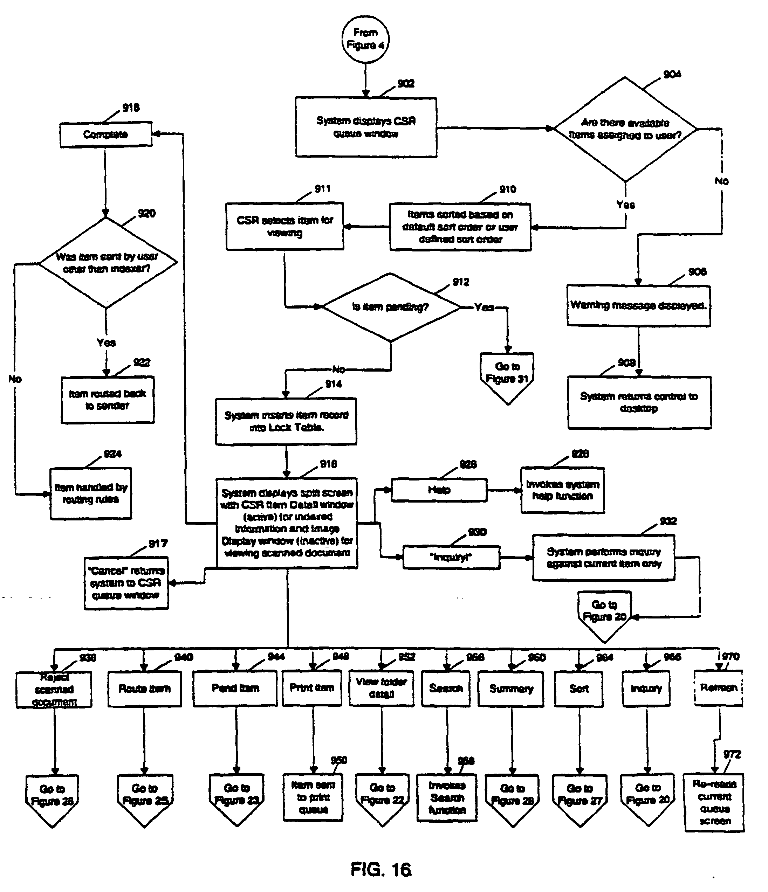

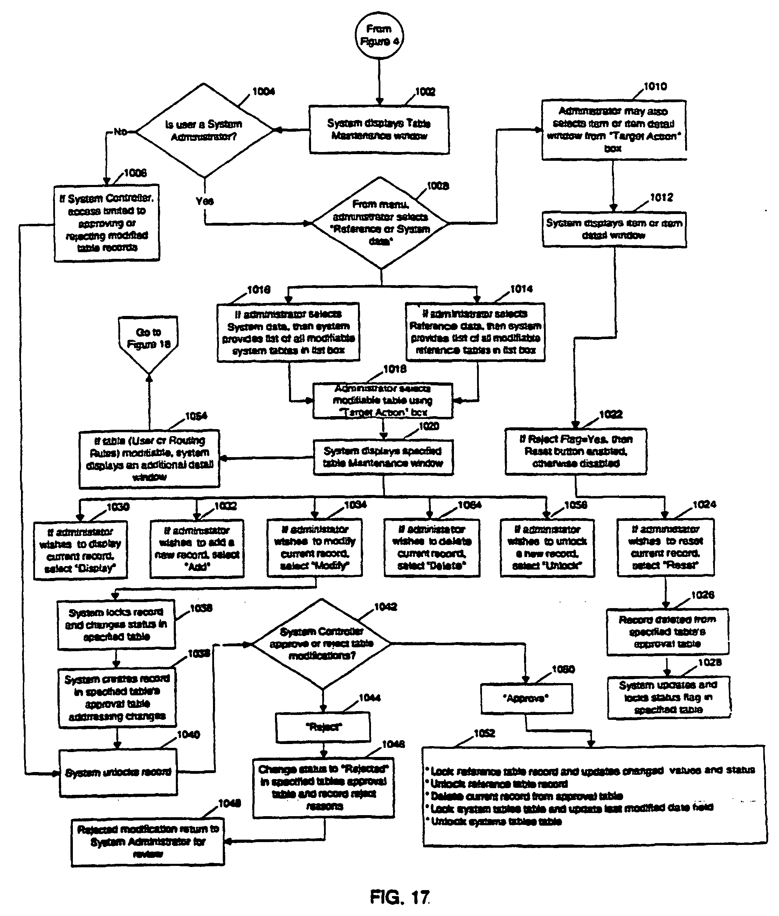

When a connection with the image server is made (at step 212), then a connection is made with the system server for user ID and password verification (at step 220). Once the connection is completed, a connection is made with the local system database at the workstation (at step 222) and prompts the user's sign-on history window indicating the date and time of the successful logon, the number of unsuccessful logon attempts, and in a bar graph form, the transfer and update of reference tables to the workstation (at step 226). Once completed, the system prompts the main menu (at step 228) to allow the user to select a particular process dependent on the user ID status (at step 230). If the user selects the password process (at step 232), the system displays the change password window (at step 223) described in FIG. 5. If the user selects the messages process (at step 234), the system displays the message queue window (at step 235) described in FIG. 6. If the user selects the index process (at step 236), the system displays the index queue window (at step 237) described in FIG. 8. If the user selects the document checker process (at step 238), the system displays the document checker queue window (at step 239) described in FIG. 11. If the user selects the TSR process (at step 240), the system displays the TSR Queue window (at step 241) described in FIG. 13. If the user selects the supervisor process (at step 242), the system displays the supervisor queue window (at step 243) described in FIG. 13. If the user selects the CSR process (at step 244), the system displays the CSR Queue window (at step 245) described in FIG. 16. If the user selects the System Administrator process (at step 246), the system displays the table maintenance window (at step 247) described in FIG. 17. The user may select "Logout" (at step 248) to exit the system (at step 249).

If the system forces the user to change their password at step 207, or if the user selects the "Password" process at step 232, the system displays the change password window (FIG. 5, step 306). The user enters the new password (at step 308), and then re-enters the new password (at step 310). The system prompts the user if the new password should be entered into the system (at step 312). A selection of cancel (at step 314) exits the process and returns the user to the main menu (at step 326). A selection of OK verifies the password against the image server logon password (at step 318). If the password is verified, then the system verifies against the database server (at step 320). If the password is verified, then the system changes the password for the image and database server (at step 322) and exits the process and returns to the main menu (at step 326). If the password does not pass either the image server or database server verifications, then the user is asked to either re-enter password or select cancel (at step 324).

When a message is sent from User A to User B, a message from the Message Server Application for new messages (at step 384) is received through the Message Alert window. If user does not wish to read the message, the system returns to the previous window (at step 390). If the user wishes to read the message, the user selects Read (at step 392) to display message.

If the user selects the Messages process (at step 234), the system accesses the Current Message Table (FIG. 6, step 352) searching for messages with a recipient ID number the same as the User ID number. The following table shows the structure of the Current Message Table.

| **CURRENT MESSAGE TABLE** | | |
|---|---|---|
| **FIELD NAME** | **DESCRIPTION** | **EXAMPLE** |
| Message ID | Integer generated in a pattern SYYJJJNNNNN | 19521400393 |
| Recipient User ID | Data containing 8 characters | 123ABC45 |
| Message Read Flag | Boolean | T= message read F= message not read |

The Message Queue window is displayed listing matching records (at step 354) with the date of message, the sender ID number, our reference number, other bank reference number, several characters of the message and the status of the message. The uses may read any selected messages (at step 360) or send a new message (at step 364). If the user does not wish to read or send a message, then select Cancel to return to the main menu (at step 366).

If the user selects Send message, then the system displays the Send Message window (at step 368), allowing the user to input a message of less than or equal to 2000 characters using the Message Detail box (at step 372). The user must direct the message to a primary recipient and may direct the message to a cc recipient (at step 374). To deliver the message, the workstation connects with the message server port (at step 376) and reads the parameters from the configuration file (at step 378). The message is read as it passes through the message server (at step 380) and the system creates a record in the Message Table, the User Message Resolution Relationship Table and in the post processor queue (at step 382). The Message Table and the User Message Relationship Resolution Table are represented below.

| **MESSAGE TABLE** | | |
|---|---|---|
| **FIELD NAME** | **DESCRIPTION** | **EXAMPLE** |
| Message ID | Integer generated in a pattern SYYJJJNNNNN | 19521400393 |
| Folder ID | Integer generated in a pattern SYYJJJNNNNN | 19521400393 |
| Message Date and Time | DD-MON-YY HH.MI.SS. | 01-MAR-96 11:03:22 |
| Sender User ID | Data containing 8 characters | 123ABC45 |
| Message Text | Variable length data up to 2000 characters | This is a description of the types of tables. |

| **USER MESSAGE RELATIONSHIP RESOLUTION TABLE** | | |
|---|---|---|
| **FIELD NAME** | **DESCRIPTION** | **EXAMPLE** |
| Message ID | Integer generated in a pattern SYYJJJNNNNN | 19521400393 |
| Recipient User ID | Data containing 8 characters | 123ABC45 |
| Primary Recipient Flag | Data containing 1 character | P= primary C= carbon copy |

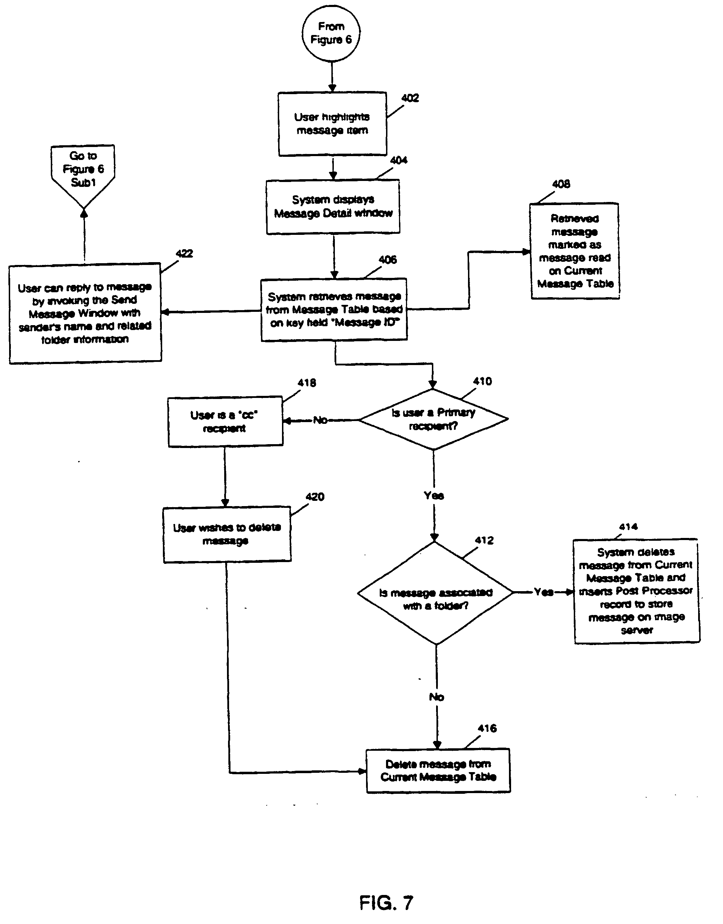

If the user wishes to read a selected message (FIG. 7, step 402), then the system displays the Message Detail window (at step 404). The system displays the message retrieved from the Message Table using the key field Message ID (at step 406) and displays the date of message sent, the sender name, our reference number, other bank reference number, and the message. Once retrieved, the system marks the message as read on the Current Message Table (at step 408). If the user is a primary recipient (at step 410), and the message is associated with a folder (at step 412), then the system saves the message by deleting the message from the Current Message Table and inserting a record into the post processor to store message on the image server (at step 414). If the message read by the primary recipient is not associated with a folder, or if the user is a cc recipient (at step 418) and has completed reading the message (at step 420), then the system deletes message from the Current Message Table (at step 416). The user can reply to the message (at step 422) by invoking the Send Message window (at step 368).

If the user selects the Index process (at step 236), the system reads the index queue and displays the Index Queue window (FIG. 8, step 452) listing items awaiting indexing. The index queue provides field boxes for item priority, product type, operation type, scan date, scan type, scan location, number of pages, current status, scanner ID, user ID, and a transmedium code displayed in the Index Queue window.

To print the Index Queue window, the user selects Item: Print (at step 466) to invoke the print function (at step 468) and send the displayed items to the print queue (at step 470). The user can select Options (at step 472) for a array of functions, including Search (at step 474) that invokes the Search function (at step 476) and Summary (at step 478). Sort (at step 482) is available allowing the user to change the default index sort using priority, product type, scan date and scan location (at step 484). The system reads the new sort (at step 486) before returning control back to the Index Queue (at step 488). Other available options are Clear (at step 490) that erases the content of the queue (at step 492), Auto Next (at step 494) that initializes the Item Detail window with the next queue entry (at step 496) and Messages (at step 498) that invokes the Message process described in FIG. 6. Selecting help (at step 502) invokes the system help function (at step 504).

If there are no items in the index queue, then the user is notified by a message box and control is return to the main menu (at step 456). If there are items in the index queue (at step 454), then the items are sorted by priority in and scan date and time in descending order (at step 458). When the user selects an item to index (at step 460), the entry is inserted into the Row Lock table (at step 462) and the system displays the Index Entry window for data input alongside the Image Display window (at step 508). The structure of the Row Lock Table is shown below.

| **ROW LOCK TABLE** | | |
|---|---|---|
| **FIELD NAME** | **DESCRIPTION** | **EXAMPLE** |
| Table Name | Variable length up to 12 characters | Item Table |
| Key Fields | Variable length up to 35 characters | Document ID |
| User ID | Data containing 8 characters | 123ABC45 |
| Locked Date and Time | DD-MON-YY HH.MI.SS. | 01-MAR-96 11:03:22 |

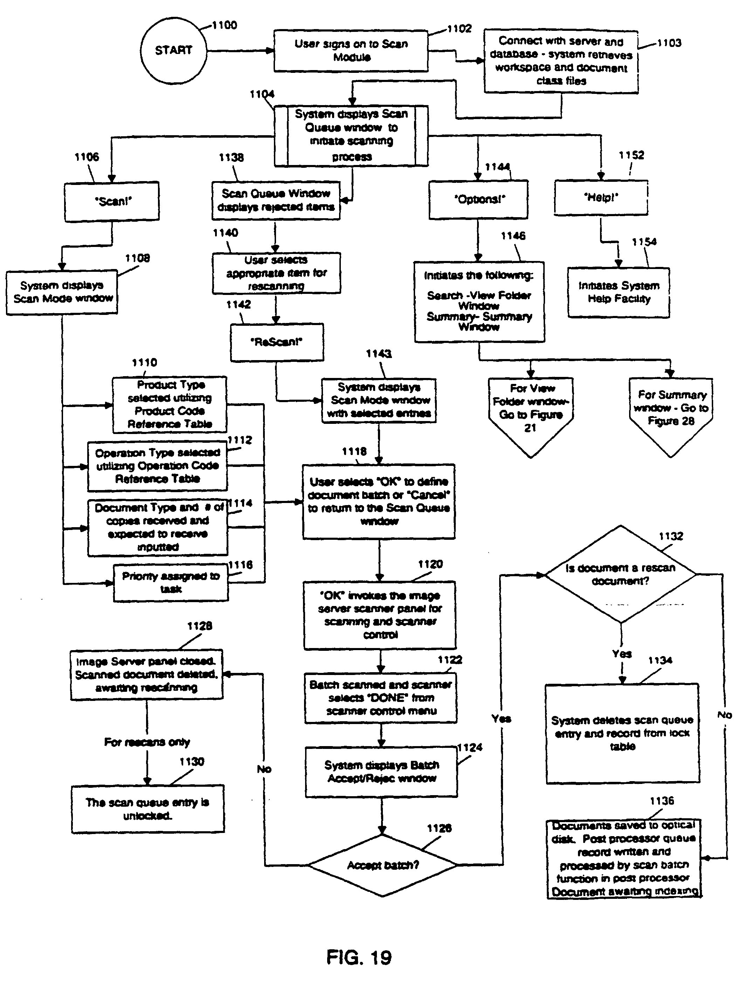

Field names are read and updated from the product and operation reference tables when the product and operation type are selected (at step 509). The user initially decides to accept or reject the scanned document (at step 514). If the image is rejected, the user invokes the reject function (at step 516) that passes control to the Reject window illustrated in FIG. 26 and the item is removed from the locked table and rejected back to scanning described in FIG. 19.

If the image is an inquiry about an instrument that has not been opened by the home bank (at step 520), then the user creates a new Customer Service Number (CSN) (at step 522). The system creates a new folder with a unique reference number and prompts the Index Entry window with unlocked data entry fields (at step 524). The user enters data for the item using the Index Entry window (at step 548).

If the field our reference number is known (at step 526), then the user inputs number (at step 528). When the inputted our reference number is new and not associated with a folder (at step 530), then the system creates a new folder and unlocks the data entry fields (at step 538) for data input (at step 548). When the inputted our reference number is associated with a folder, then the system accesses the Folder Table illustrated in FIG. 38, inputs the available folder level data, and item data fields remain unlocked (at step 532) for data input (at step 548).

When the user does not know our reference number, then the user can initiate a folder search (at step 534) by selecting Options - Search (at step 540) or create a new folder (at step 536). The folder search initiates the Search window (at step 542) allowing the user to select an appropriate folder (at step 544). When the user selects the appropriate folder, the folder level data is locked with item level fields unlocked in the Index Entry window (at step 546). If a new folder is created, the Index Entry window is displayed with unlocked data entry fields.

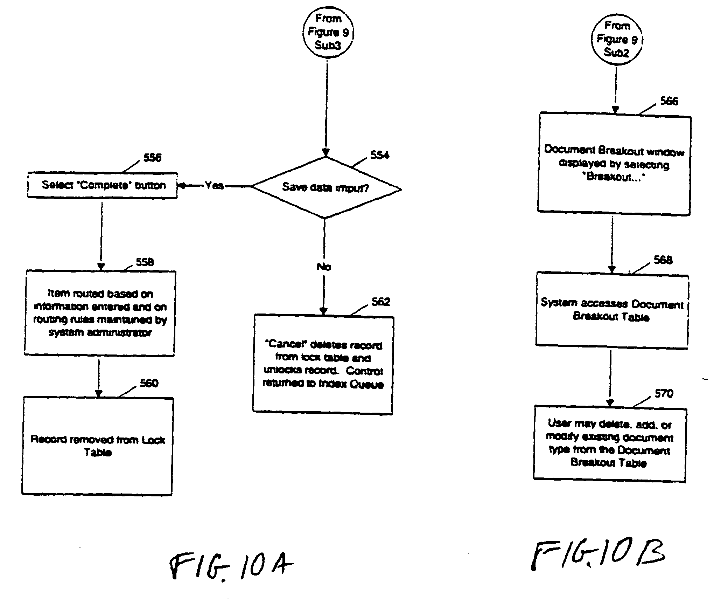

Once all data is inputted into the unlocked fields (at step 548), the user can save the input (FIG. 10, step 554) by selecting the Complete button (at step 556). The item is routed based on the information entered and on routing rules maintained by the System Administrator (at step 558). The record is then removed from the Lock Table. The user may also select cancel, which deletes the record from the lock table and unlocks the record (at step 562).

If more detail of the document is needed (at step 510), the user can invoke the Document Breakout window (FIG. 10, step 566) that accesses the Document Breakout Table (at step 568), as shown below, which allows the user to delete, add, or modify the existing document type from the table (at step 570)

| **DOCUMENT BREAKOUT TABLE** | | |
|---|---|---|
| **FIELD NAME** | **DESCRIPTION** | **EXAMPLE** |
| Item ID | Integer | 0,1,2,3... |
| Starting Page Number | Positive integer | 1,2,3... |
| Document Type Code | Data containing 3 characters | 123 |
| Ending Page Number | Positive integer | 1,2,3... |
| Copies | Variable length up to 10 characters | Entered as text in form of 1/1, 2/1 to account for multiple copies expected and received. |

If the user (checker) selects the Document Checker process (at step 238), the system displays the Document Checker Queue window (FIG. 11, step 602) listing items awaiting review. The queue provides field boxes for item priority, product type, operation type, our reference number, other bank reference number, corporate compliance check, scan date, scan location, current status, scanner ID and scan time displayed in the queue window.

If the item list is empty (at step 604), then the system displays a warning message (at step 606) and the system returns control to the desktop (at step 608). When the item list is not empty, then the items are sorted based on the default sort order (at step 610) or user defined sort order (at step 634). The checker selects an item for display (at step 612), and if the item is viewed by others (at step 614), then the item is displayed in read-only status with the edit function disabled (at step 616). If the item is not viewed by others, then the system inserts the item record into the Lock Table (at step 617).

If the item is currently pending, then the system displays the Pend History window for review (at step 619). If the item is not pending, the system displays a split screen with the Document Checker Item Detail window for indexing information and the Image Display window for viewing the scanned document (at step 620). The Save button is disabled and the Complete and Re-check buttons are enabled.

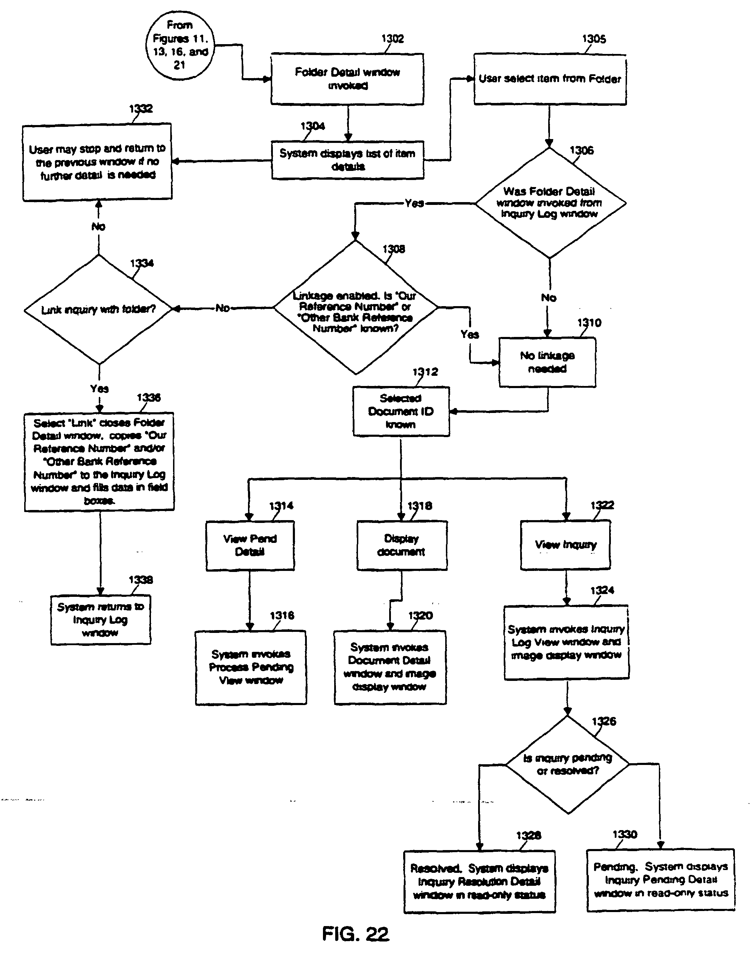

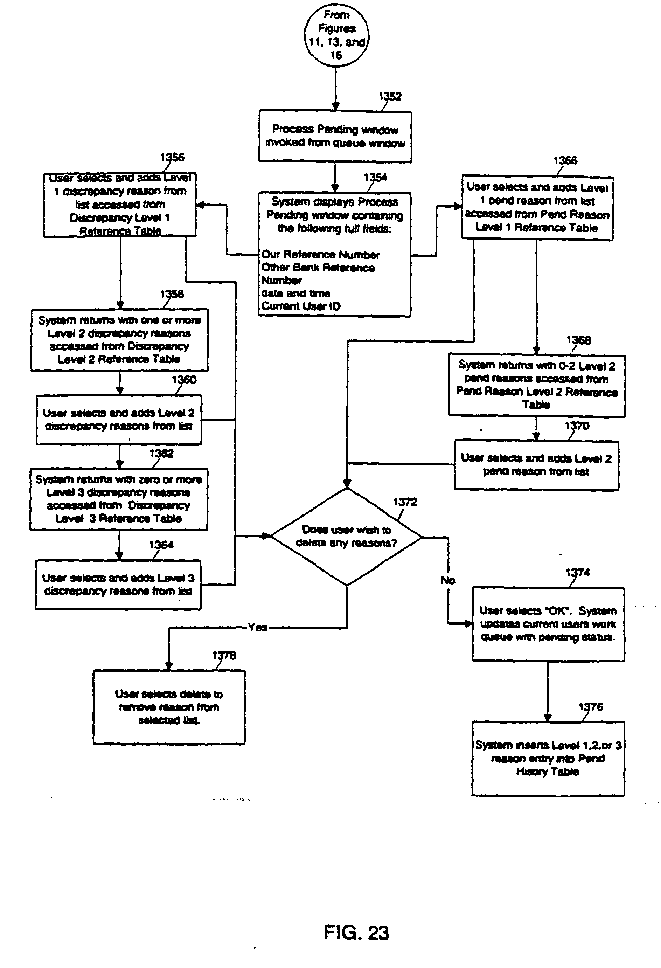

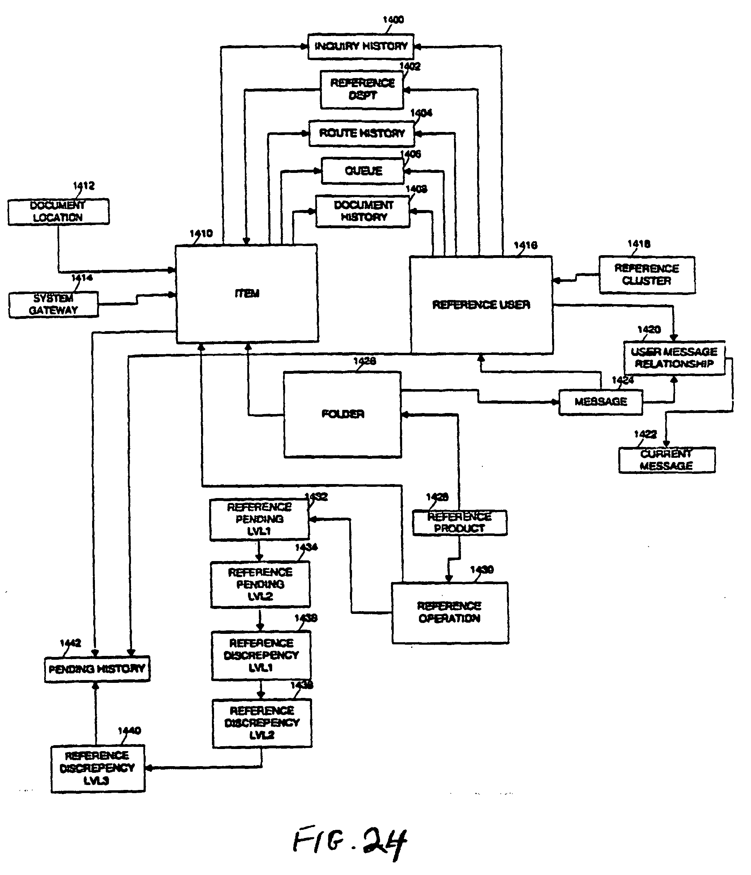

To reject the scanned item, the checker selects Reject (at step 636) that displays the Reject window illustrated in FIG. 24. To route an item to another user, Route (at step 640) is selected that invokes the Route window illustrated in FIG. 24. To pend an item, Pend (at step 644) is selected that invokes the Process Pending function described in FIG. 23. To print the Document Checker Queue window, the checker selects Print (at step 648) to invoke the print function and send the displayed items to the print queue (at step 650). The checker can view the item folder in detail by selecting Folder Detail (at step 652) that invokes the folder detail window described in FIG. 22. Search (at step 656) invokes the Search function (at step 658) and Summary (at step 660) invokes the Summary function diagramed in FIG. 25. Sort (at step 664) is available allowing the checker to change the default sort order using the sort window illustrated in FIG. 24. Other available options are Corporate Compliance Check (at step 668) illustrated in FIG. 24, Refresh (at step 672) that re-reads the Document Checker queue (at step 674), and Change Folder (at step 632) that invokes the Folder Maintenance window for the System Administrator (at step 634) described in FIG. 17. Messages (at step 628) invokes the Message process described in FIG. 6. Selecting help (at step 624) invokes the system help function (at step 626).

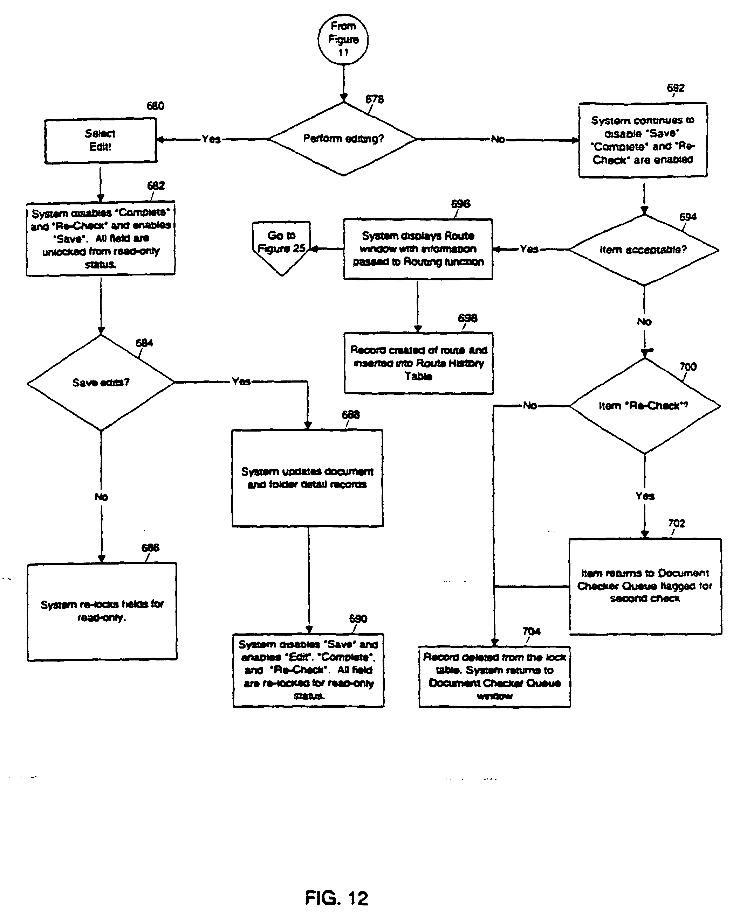

The checker is allowed to edit fields when in the Document Checker Item Detail window (FIG. 12, step 678). If the checker chooses to edit fields (at step 680), then the system changes mode and disables the Complete and Re-check buttons and enables the Save button and all field are unlocked from the read-only status (at step 682). After the checker edits the appropriate fields, the checker can choose to save the edits (at step 684). If the checker selects Cancel, then the system re-locks the fields for read-only status (at step 686). To choose to save the edits, the checker selects Save, allowing the system to update the document and folder level detail records (at step 688). The system disables Save, enables the Edit, Complete and Re-Check options, and places all fields in read-only status by re-locking fields (at step 690).

If there is no field editing to be performed, the system mode remains with the Save button disabled and the Complete and Re-check buttons enabled (at step 692). The checker must decide whether to accept the review item (at step 694), have the item re-checked by another checker (at step 700), or ignore review process with the record deleted from the lock table and the system returns to the queue window (at step 704). If the item is acceptable (at step 694), the system displays the Route window (at step 696) with the route information passing to the route function. A record is created of the route and inserted into the Route History Table displayed below. If the item is re-checked (at step 700), then the item is returned to the Document Checker queue flagged for a second check (at step 702). The item is never checked by the same checker.

| **ROUTE HISTORY TABLE** | | |
|---|---|---|
| **FIELD NAME** | **DESCRIPTION** | **EXAMPLE** |
| Document ID | Integer generated in a pattern SYYJJJNNNNN | 19521400393 |
| Route Date and Time | DD-MON-YY HH.MI.SS. | 01-MAR-96 11:03:22 |
| From User ID | Data containing 8 characters | 123ABC45 |
| To User ID | Data containing 8 characters | 123ABC45 |
| Route Memo | Variable length up to 2000 characters | This is a description of the types of routes. |

The TSR and Supervisor processes are similar in user functionality except that the Supervisor has the additional capability of accessing Aging reports and performing reassignment control (FIG. 13, step 754). If the user selects the TSR (at step 240) or Supervisor (at step 242) process, the system displays either the TSR or Supervisor Queue window (at step 752). The queue provides product type, operation type, receipt date, router User ID number, beneficiary name and location, corporate compliance check status, L/C (letter of credit) amount, currency amount, our reference number, other bank name and reference number, current status, route date, and manual complete flag.

If the item list is empty (at step 758), then the system displays a warning message (at step 760) and the system returns control to the desktop (at step 762). When the item list is not empty, then the items are sorted based on the default sort order (at step 764) or user defined sort order (at step 820). The user selects an item for display (at step 765), then the system inserts the item record into the Lock Table (at step 768) if the item is not pending (at step 766).

If the item is currently pending, then the system displays the Pend History window illustrated in FIG. 26 for review. If the item is not pending, the system displays a split screen with the transaction service representative or Supervisor Item Detail window for indexing information and the Image Display window for viewing the scanned document (at step 770). The Save button is disabled and the Complete and Pend buttons are enabled.

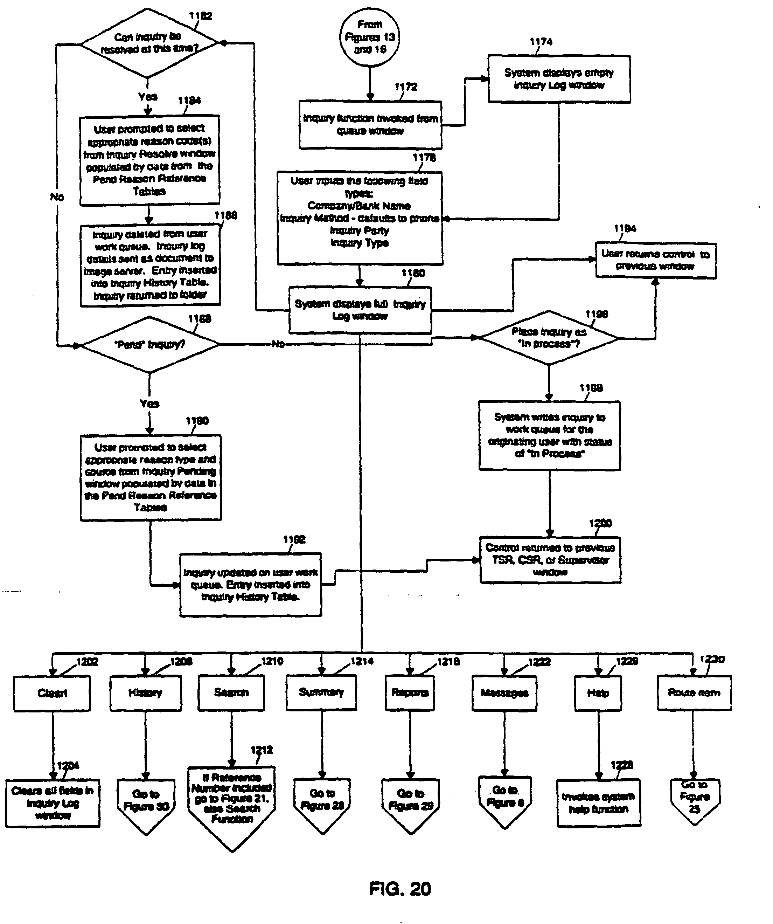

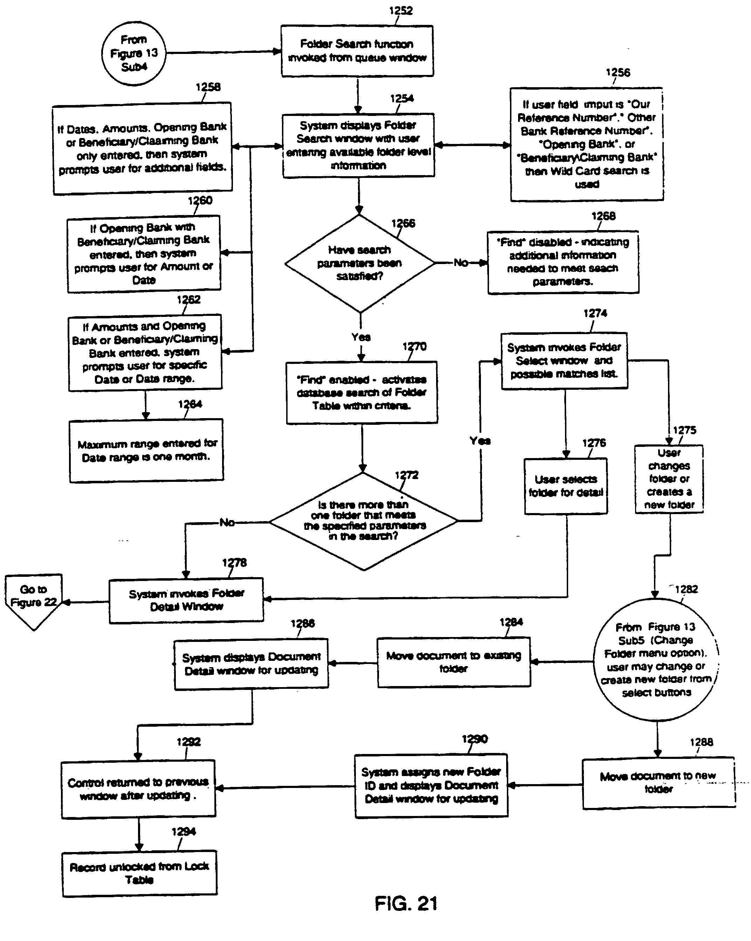

To reject the scanned item, the user selects Reject (at step 792) and the system displays the Reject window illustrated in FIG. 24. To route an item to another user, Route (at step 796) is selected that invokes the Route window illustrated in FIG. 24. To pend an item, Pend (at step 800) is selected that invokes the Process Pending function described in FIG. 23. To print the TSR or Supervisor Queue window, the user selects Print (at step 804) to invoke the print function and send the displayed items to the print queue (at step 806). The user can view the item folder in detail by selecting Folder Detail (at step 808) that invokes the folder detail window described in FIG. 22. Search (at step 812) invokes the Search function (at step 814) and Summary (at step 816) invokes the Summary function diagramed in FIG. 25. Sort (at step 820) is available allowing the user to change the default sort order using the Sort window illustrated in FIG. 24. Other available options are Corporate Compliance Check (at step 824) illustrated in FIG. 24, Refresh (at step 828) that re-reads the TSR or Supervisor queue (at step 830), and Change Folder (at step 788) that allows the user to change or create a new folder for the item as described in FIG. 21. To specifically search for a folder, Search Folder (at step 776) is selected, invoking the Folder Search function described in FIG. 21. For a history of a particular folder related to the item, Folder History can be selected (at step 772), invoking the Folder History window (at step 774). Inquiry (at step 784) invokes the inquiry function as described in FIG. 20. Selecting help (at step 780) invokes the system help function (at step 782).

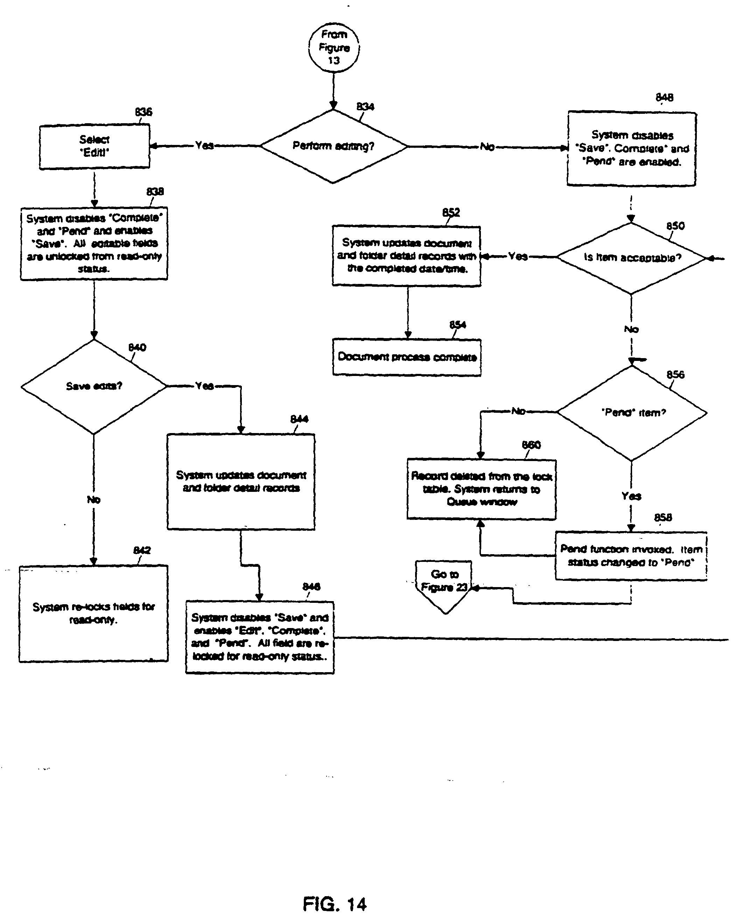

The user is allowed to edit fields when in the TSR or Supervisor Item Detail window (FIG. 14, step 834). If the user chooses to edit fields (at step 836), then the system changes mode and disables the Complete and Pend buttons and enables the Save button and all field are unlocked from the read-only status (at step 838). After the user edits the appropriate fields, the user can choose to save the edits (at step 840). If the user selects Cancel, then the system re-locks the fields for read-only status (at step 842). To save edits, the user selects Save, allowing the system to update the document and folder level detail records (at step 844). The system disables the Save, enables the Edit, Complete and Pend options, and places all fields in read-only status by re-locking fields (at step 846).

If there is no field editing to be performed, the system mode remains with the Save button disabled and the Complete and Pend buttons enabled (at step 848). The user must decide whether to accept the reviewed item (at step 850), have the item pended (at step 856), or ignore the review process with the record deleted from the lock table and the system returns to the queue window (at step 860). If the item is acceptable (at step 850), the system updates the document and folder detail records with the completed date and time (at step 852). The document is then complete (at step 854). If the item is to be pended (at step 856), the pend function is invoked (at step 858) as described in FIG. 23 and the item status is changed to Pend. The record is deleted from the lock table and the system returns to the queue window (at step 860).

As stated before, the supervisor has the capability of accessing Aging reports and performing reassignment control (at step 754). If the supervisor selects Reassignment (at step 864), the user reassigns the work (including mail) from one user to another user indicating the item type and status (at step 866). If the supervisor selects Aging (at step 868), the system accesses the TSR and/or CSR queue information (at step 870) for presenting different types of reports. For an Item Time Report (at step 872), the report is prepared by entry or receipt date (at step 874). For an Overall Report (at step 876), the report is prepared by the overall aggregated status for CSRs or TSRs (at step 878). For a TSR Report (at step 880), the report is prepared using TSR aggregated by status or status aggregate by TSR (at step 882). For a CSR Report (at step 884), the report is prepared using CSR aggregated by status or status aggregate by transaction service representative (at step 884).

If the user selects the CSR process (at step 244), the system displays the CSR Queue window (at step 902). The queue provides product type, operation type, receipt date, router User ID number, beneficiary name and location, L/C (letter of credit) currency and amount, our reference number, other bank name and reference number, current status, route date, and manual complete flag.

If the item list is empty (at step 904), then the system displays a warning message (at step 906) and the system returns control to the desktop (at step 908). When the item list is not empty, then the items are sorted based on the default sort order (at step 910) or user defined sort order (at step 964). The user selects an item for display (at step 911), then the system inserts the item record into the Lock Table (at step 914) if the item is not pending (at step 912).

If the item is pending, then the system displays the Pend History window illustrated in FIG. 31 for review. If the item is not pending, the system displays a split screen with the CSR Item Detail window containing indexing information and the Image Display window for viewing the scanned document (at step 916). The Complete button is enabled.

To reject the scanned item, the user selects Reject (at step 936) which displays the Reject window illustrated in FIG. 24. To route an item to another user, Route (at step 940) is selected that invokes the Route window illustrated in FIG. 24. To pend an item, Pend (at step 944) is selected that invokes the Process Pending function described in FIG. 23. To print the CSR Queue window, the user selects Print (at step 948) to invoke the print function and send the displayed items to the print queue (at step 950). The user can view the item folder in detail by selecting Folder Detail (at step 952) that invokes the folder detail window described in FIG. 22. Search (at step 956) invokes the Search function (at step 958) and Summary (at step 960) invokes the Summary function diagramed in FIG. 25. Sort (at step 964) is available allowing the user to change the default sort order using the sort window illustrated in FIG. 24. Other available options are Inquiry (at step 930 for item based and 966 for general inquiry) as described in FIG. 20, and Refresh (at step 970) that re-reads the CSR queue (at step 972). Selecting help (at step 926) invokes the system help function (at step 928).

The user must decide whether to accept the reviewed item (at step 918), or ignore the review process with the record deleted from the lock table and the system returns to the CSR queue window (at step 917). If the item is acceptable (at step 918), then the item is sent back to the sender (at step 922) when the sender is not an indexer (at step 920), or the item is sent by routing rules when the sender was an indexer (at step 924).

If the user selects the System Administrator process (at step 246), the system displays the Table Maintenance window (FIG. 17, step 1002). Access to items different between a System Administrator and a System Controller (at step 1004). If the user is a System Controller, access is limited to approving or rejecting modified table records (at step 1006). A System Administrator may initially choose Reference or System Data (at step 1006) or may select an item from the Target Action box (at step 1010) for viewing (at step 1012). If the reject flag is "Yes", then the reset button is enabled (at step 1022), allowing the administrator to reset current record (at step 1024), which deleted the record from the specified table's approval table (at step 1026). The system updates and locks status flag in the specified table (at step 1028).

If the System Administrator selects System Data, then the system provides a list of all modifiable system tables in the list box (at step 1016). If the System Administrator selects Reference Data, then the system provides a list of all modifiable reference tables in the list box (at step 1018). The administrator can select the table to be modified using the Target Action box (at step 1018). The system displays the table in the Maintenance window (at step 1020). The administrator can display the current record (at step 1030), add a new record to the table (at step 1032), modify a current record (at step 1034), delete a current record (at step 1054), or unlock a current record (at step 1056). When the administrator wishes to modify a current record (at step 1032), then the system locks the record and changes the status in the specified table (at step 1036). The system then creates the new modified record in the specified table's approval table addressing the changes made by the administrator (at step 1038) and unlocks the record for the modified table (at step 1040).

The System Controller must approve or reject the modifications (at step 1042). If the controller approves of the modifications (at step 1050), then the system locks the reference table record and updates the changed values and status. The system then unlocks the reference table record and deletes the current record from the approval table. The system then locks the system tables and updates last modified date field. The system unlocks the system table (at step 1052). If the controller rejects a modification made by the administrator, then the status of the specified table in the approval table is changed to rejected (at step 1046) with a recorded reason. The rejected modification is returned to the System Administrator for review (at step 1048).

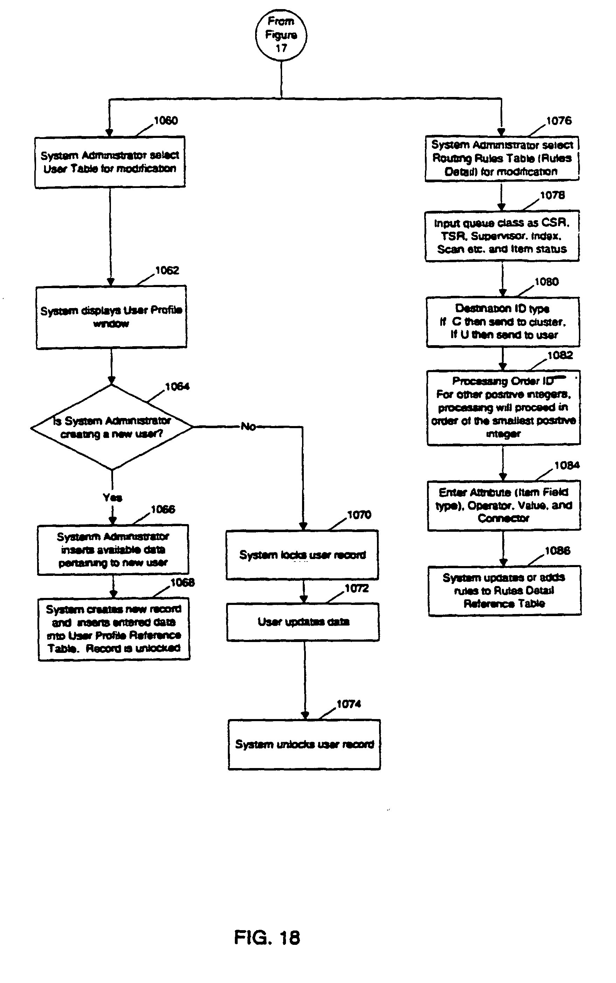

If the table selected from step 1018 was a modifiable User or Routing Rules Table (at step 1054), then additional detail tables are presented. If a User Table is selected for modification (FIG. 18, step 1060), then the system displays the User Profile window (at step 1062) that access data from the User Profile Reference Table displayed in FIG. 37. If the System Administrator is creating a new user (at step 1064), then the administrator inserts available information about the user into the associated field boxes (at step 1066), and the system creates the new record, inserting the data into the User Profile Reference Table (at step 1068). If the System Administrator is modifying an existing record, then the system locks the user record in the User Profile Reference Table allowing the administrator to update the record (at step 1072). Once complete, the system unlocks the user record from the User Profile Reference Table (at step 1074).

If a Rules Detail Table is selected for modification (at step 1076), then the system displays the Routing Rules window that access data from the Rule Detail Reference Table displayed below.

| **RULE DETAIL REFERENCE TABLE** | | |
|---|---|---|
| **FIELD NAME** | **DESCRIPTION** | **EXAMPLE** |
| Rule ID | Integer | 0,1,2,3... |
| Origin ID | Integer | 0,1,2,3... |
| Processing Order | Positive Integer | 1,2,3... |
| Attribute | Variable length up to 31 characters | Attribute |
| Operator | Data containing 2 characters | 12 |
| Value | Variable length up to 31 characters | Value |
| Connector | Data containing 1 character | 1 |
| Record Status | Data containing 1 character | A |

The System Administrator is required to input the queue class, such as CSR, TSR, Supervisor, Indexer, or Scanner, and input the item status (at step 1078). The destination is determined by using C if the item is to be routed to a cluster or U if the item is to be routed to an user (at step 1080). The processing order is determined by inputting a positive integer, with processing proceeding in order of the smallest positive integer (at step 1082). The administrator must then enter an attribute (item field type), an operator, a value and connecter (at step 1084). Once completed, the user selects OK and the system updates or adds the rules to the Rule Detail Reference Table (at step 1086).

To perform scanning, the user must go through a separate logon process because it is a standalone module (at step 1102). The functionality of the logon process is the same as the system logon process, as the user must sign on to the Scan module to access the scan functions. The scanner must have a user profile record and a user ID and password assigned to the image server and the database server. Once connected, the system retrieves the workspace and document class files, for providing access to the image server scan functions (at step 1103).

The system displays the Scan Queue window to initiate the scanning process (at step 1104). The queue provides field boxes for priority, product type, operation type, scan date and time, batch ID, number of pages, scanner ID number, reject reason code, reject user ID number, and reject site boxes. To scan a document, the scanner selects "Scan!" (at step 1106) from the menu that displays the Scan Mode window (at step 1108). The scanner selects the product type (at step 1110), the operation type (at step 1112), the document type, the number of copies received and expected to receive inputted (at step 1114), and the priority assigned to the task (at step 1116). If the item is a rescanned item (at step 1138), then the user selects the appropriate item for rescanning (at step 1140), and selects "ReScan!" (at step 1142), which invokes the system to display the Scan Mode window with the selected entries for rescanning (at step 1143). Whether the item is a new document to be scanned, or a rescanned document, the user must select OK to define document batch or Cancel to return to the Scan Queue window (at step 1118).

When OK is selected, the system invokes the image server scanner panel for scanning and scanner control (at step 1120). Once the batch is scanned and the user selects Done from the control menu (at step 1122), then the system prompts the scanner with a Batch Accept/Reject window (at step 1124) to accept or reject the scanned document (at step 1126). If the scanner rejects the batch, then the image server panel is closed, the scanned document is deleted and awaiting rescanning (at step 1128). If the document is a rescan, then the scan queue entry is unlocked (at step 1130). If the scanner accepts the batch (at step 1126), and if the document is a rescan (at step 1132), then the system deletes the scan queue entry and record from the lock table (at step 1134). If the document is accepted but is not a rescan, then the document is saved to optical disk and the post processor queue record is written and processed by the scan batch function in the post processor (at step 1136). The document is awaiting indexing.

The user can select options (at step 1144) to initiate the Search and Summary functions (at step 1446). The Search selection invokes the View Folder window (at step 1148) described in FIG. 21 and the Summary selection invokes the Summary window illustrated in FIG. 25. Selecting help (at step 1152) invokes the system help function (at step 1154).

The system provides a method of handling customer inquiries. This option can be selected from the CSR, TSR or Supervisor, and provides the user, upon receiving a customer inquiry, the ability to search for a folder and display the contents. When invoked from the queue window (at step 1172), the system displays an empty Inquiry Log window (at step 1174). The log provides boxes for product type, current date and time, current User ID number, contact name, name of company/bank, phone number of caller, our reference number, other bank reference number, inquiry party, inquiry type, inquiry method, status, user ID number of router, date item was routed, and a memo field for any additional information. The user inputs the company/bank name, inquiry method, inquiry party and inquiry type (at step 1178), and the system returns with a full Inquiry Log window (at step 1180).

If the inquiry can be resolved at the time of review (at step 1182), then the user is prompted to select the appropriate reason codes from the Inquiry Resolve window (at step 1184) populated by data from the Pend Reason Reference Tables displayed below.

| **PEND REASON LEVEL ONE REFERENCE TABLE** | | |
|---|---|---|
| **FIELD NAME** | **DESCRIPTION** | **EXAMPLE** |
| Product Code | Data containing 1 character | 1 |
| Operation Code | Data containing 6 characters | 123ABC |
| Pend Reason Level One Code | Data containing 3 characters | 123 |
| Pend Reason Level One Name | Variable length up to 35 characters | Tom Jones |
| Record Status | Data containing 1 character | A |

| **PEND REASON LEVEL TWO REFERENCE TABLE** | | |
|---|---|---|
| **FIELD NAME** | **DESCRIPTION** | **EXAMPLE** |
| Product Code | Data containing 1 character | 1 |
| Operation Code | Data containing 6 characters | 123ABC |
| Pend Reason Level One Code | Data containing 3 characters | 123 |
| Pend Reason Level Two Code | Data containing 3 characters | 123 |
| Pend Reason Level Two Name | Variable length up to 35 characters | Greta Jones |
| Record Status | Data containing 1 character | A |

The inquiry is then deleted from the user work queue, and the inquiry log details are sent as documents to the image server (at step 1186). The entry is inserted into the Inquiry History Table and the inquiry is returned to the folder. The Inquiry History Table is shown below.

| **INQUIRY HISTORY TABLE** | | |
|---|---|---|
| **FIELD NAME** | **DESCRIPTION** | **EXAMPLE** |
| Document ID | Integer generated in a pattern SYYJJJNNNNN | 19521400393 |
| Inquiry Date and Time | DD-MON-YY HH.MI.SS. | 01-MAR-96 11:03:22 |
| Inquiry Type Code | Data containing 4 characters | 123A |
| Inquiry Party Code | Data containing 4 characters | 123A |
| Inquiry Method Code | Data containing 4 characters | 123A |
| Inquiry Handler User ID | Data containing 8 characters | 123ABC45 |
| Inquiry Bank Name | Variable length up to 35 characters | Austin Bank |
| Inquiry Contact Name | Variable length up to 35 characters | John Jones |
| Inquiry Contact Phone Number | Variable length up to 20 characters | 15121234567 |
| Inquiry Contact Fax Number | Variable length up to 20 characters | 15121234567 |

If the inquiry can not be resolved at the time of review, then the user can Pend the inquiry (at step 1188), place the inquiry as In-Process (at step 1196), or ignore the inquiry and return to the previous window (at step 1194). When the inquiry is pended, the user is prompted to select an appropriate reason and source for the pend from data from the Inquiry Pending window (at step 1190) that is populated by data from the Pend Reason Reference Tables. The inquiry is updated on the user work queue (at step 1192) and the entry is inserted into the Inquiry History table. If the inquiry is classified as In-Process (at step 1196), then the system writes the inquiry to the work queue for the originating user with a status of In-Process (1198). When the placement of an inquiry as Pending or In-process is complete, the system returns control to the previous window (at step 1200).

To clear the fields in the Inquiry Log window, the user selects Clear (at step 1202). To go to the Inquiry History window, the user selects History (at step 1206). Search (at step 1210) invokes the Search function or the Folder Search function if the reference number is included (at step 1212). Summary (at step 1214) invokes the Summary function diagramed in FIG. 25. Selecting Reports (at step 1218) invokes the report windows illustrated in FIG. 25 and selecting Messages (at step 1222) invokes the message queue described in FIG. 6. Selecting help (at step 1226) invokes the system help function (at step 1228). To route an item to another user, Route (at step 1230) can be selected to invoke the Route window illustrated in FIG. 24.

The folder search function is designed to allow users to enter information about a folder, or a transaction in a folder, or to find the specific folder to review. The folder search function specifically can only be activated from the TSR or supervisor process as described in FIG. 13. However, the search function can be called from other functions to link a document to a folder. When the Folder Search function is invoked (FIG. 21, step 1252), the system displays the Folder Search window with the user entering available folder level information (at step 1254). If the user field input is our reference number, other bank reference number, opening bank or beneficiary\claiming bank, then a "Wild Card" search can be used (at step 1256). If the user enters the date, amount, opening bank or beneficiary/claiming bank only, then the system prompts the user for additional information (at step 1258) If the opening bank with beneficiary/claiming bank is entered only, then the system prompts the user for the amount or date (at step 1260). If the amounts and opening bank or beneficiary/claiming bank is entered only, then the system prompts user for specific date or date range (at step 1262), with the maximum range entered for the date range is one month (at step 1264). The system does not enable the Find button (at step 1268) until the search parameters are satisfied (at step 1266). Once the search parameters are satisfied, the system enables the Find button, which activated the database search of the Folder Table (at step 1270) displayed in FIG. 29.

If the search produced more than one folder that meets the parameters (at step 1272), then the system invokes the Folder Select window providing a list of possible folder matches (at step 1274). The user may select a folder for detail (at step 1276) which invokes the Folder Detail window, or move the item to a new or different folder (at step 1275). The move or change folder option can also be invoked from FIG. 13, Sub5 - Change Folder (at step 1282). If there is only one folder that meets the search parameters, then the system invokes the Folder Detail window.

If the user selects to move the item to an existing folder (at step 1284), the item is locked and inserted into the Lock Table, and the system displays the Document Detail window for updating (at step 1286). Once the folder has been moved and the tables updated, the system control returns to the previous window (at step 1292). If the user selects to move the item into a newly created folder (at step 1288), then the system assigns a new folder ID and displays the Document Detail window for updating (at step 1290). Once the system returns control to the previous window (at step 1292), the record is unlocked from the Lock Table (at step 1294).

When only one folder meets the search parameters, or when a user selects a folder for detail from the Folder Select window, or when a user invokes the Folder Detail function (FIG. 11, FIG. 13, and FIG. 16), then the system invokes the Folder Detail window (FIG. 22, step 1302). The system displays a list of items from the folder (at step 1304). If no further detail is needed, the user may return to the previous window (at step 1332). The user may select an item from the folder for viewing (at step 1305), however, if the Folder Detail window was not invoked from the Inquiry Log window (at step 1306), then no linkage is needed (at step 1310) because the selected Document ID is known (at step 1312). If the Folder Detail window was invoked from the Inquiry Log window (at step 1306), then the Linkage button is enabled and the user can insert our reference number or other bank reference number (at step 1308). If either number is known, then no linkage is needed (at step 1310) because the Document ID is known (at step 1312).

If the item is pending, then the user can view the Process Pending View window (at step 1316) by selecting the View Pend Detail (at step 1314). The user select display (at step 1318) to invoke the Document Detail window and image display window (at step 1320). The user can select inquiry (at step 1322) to invoke the Inquiry Log View window and image display window (at step 1324). The inquiry may be resolved or pending (at step 1326). If the inquiry is resolved, then the system displays the Inquiry Resolution Detail window in read-only status (at step 1328). If the inquiry is pending, then the system displays the Inquiry Pending Detail window in read-only status (at step 1330).

If neither the our reference number or other bank reference number is known, then the inquiry must be linked with a folder (at step 1334). The user selects Link which closes the Folder Detail window, and copies our reference number and/or other bank reference number to the Inquiry Log window and fills data in the field boxes (at step 1336). The system returns to the Inquiry Log window (at step 1338).

The Process Pending function can be invoked from the Document Checker, TSR, Supervisor, and CSR processes by selecting the Pend function when the item cannot be processed immediately due to discrepancies. When the Pend function is selected, the Process Pending window is invoked (at step 1352). The system displays the Process Pending window with the our reference number, other bank reference number, data and time and current User ID fields filled (at step 1354). The user can select a level one discrepancy reason from the pull down menu list accessed from the Discrepancy Level One Reference Table (at step 1356). The system returns with one or more level two discrepancy reasons accessed from the Discrepancy Level Two Reference Table (at step 1358). The user selects and adds the level two discrepancy reason from the list (at step 1360). The system returns with zero or more level three discrepancy reasons accessed from the Discrepancy Level Three Reference Table (at step 1362). The user selects and adds the level three discrepancy reason from the list (at step 1364).

| **DISCREPANCY LEVEL ONE REFERENCE TABLE** | | |
|---|---|---|
| **FIELD NAME** | **DESCRIPTION** | **EXAMPLE** |
| Pend Reason Level One Code | Data containing 3 characters | 123 |
| Pend Reason Level Two Code | Data containing 3 characters | 123 |
| Discrepancy Level One Code | Data containing 3 characters | 123 |
| Product Code | Data containing 1 character | 1 |
| Operation Code | Data containing 6 characters | 123ABC |
| Discrepancy Level One Name | Variable length up to 35 characters | Julie Jones |
| Record Status | Data containing 1 character | 1 |

| **DISCREPANCY LEVEL TWO REFERENCE TABLE** | | |
|---|---|---|
| **FIELD NAME** | **DESCRIPTION** | **EXAMPLE** |
| Pend Reason Level One Code | Data containing 3 characters | 123 |
| Pend Reason Level Two Code | Data containing 3 characters | 123 |
| Discrepancy Level One Code | Data containing 3 characters | 123 |
| Discrepancy Level Two Code | Data containing 3 characters | 123 |
| Product Code | Data containing 1 character | 1 |
| Operation Code | Data containing 6 characters | 123ABC |
| Discrepancy Level Two Name | Variable length up to 35 characters | Andy Jones |
| Record Status | Data containing 1 character | 1 |

| **DISCREPANCY LEVEL THREE REFERENCE TABLE** | | |
|---|---|---|
| **FIELD NAME** | **DESCRIPTION** | **EXAMPLE** |
| Pend Reason Level One Code | Data containing 3 characters | 123 |
| Pend Reason Level Two Code | Data containing 3 characters | 123 |
| Discrepancy Level One Code | Data containing 3 characters | 123 |
| Discrepancy Level Two Code | Data containing 3 characters | 123 |
| Discrepancy Level Three Code | Data containing 3 characters | 123 |
| Product Code | Data containing 1 character | 1 |
| Operation Code | Data containing 6 characters | 123ABC |
| Discrepancy Level Three Name | Variable length up to 35 characters | Cindy Jones |
| Record Status | Data containing 1 character | 1 |

The user can select a level one pend reason from the pull down menu list accessed from the Pend Level One Reason Reference Table (at step 1366). The system returns with zero to two level two pend reasons accessed from the Pend Level Two Reasons Reference Table (at step 1368). The user selects and adds the level two pend reason from the list (at step 1370).

Once all the reasons have been selected, the user can delete any reasons (at step 1372). If the user chooses to, the reasons are removed from the selected list (at step 1378). The user can save the reasons by selects OK that updates the current users work queue with the pending status of the item (at step 1374). The system inserts the Level one, two, or three reason entries into the Pend History Table (at step 1376) shown below.

| **PEND HISTORY TABLE** | | |
|---|---|---|
| **FIELD NAME** | **DESCRIPTION** | **EXAMPLE** |
| Document ID | Integer generated in a pattern SYYJJJNNNNN | 19521400393 |
| Pend Date and Time | DD-MON-YY HH.MI.SS. | 01-MAR-96 11:03:22 |
| Product Code | Data containing 1 character | 1 |
| Operation Code | Data containing 6 characters | 123ABC |
| User ID | Data containing 8 characters | 123ABC45 |
| Pend Level One Code | Data containing 3 characters | 123 |
| Pend Level Two Code | Data containing 3 characters | 123 |
| Discrepancy Level One Code | Data containing 3 characters | 123 |
| Discrepancy Level Two Code | Data containing 3 characters | 123 |
| Discrepancy Level Three Code | Data containing 3 characters | 123 |

### PREFERRED HARDWARE AND SYSTEMS ARCHITECTURE

The present invention uses an open systems approach that does not lock user sites into a particular hardware of software platform. The preferred client/server architecture splits processing between the end-user workstations and one or more servers.

A single HP9000, model G90, may be used to support all server processes in a regional processing center. This includes FileNet's information management system, Oracle7 relational database management system (RDBMS), trade records information management system server processes, the update application, and the gateway between the local and central data storage means.

The preferred minimum user configuration will consist of a 486/66 microcomputer having 16 Megabytes of RAM, 500 Megabyte hard drive, 19" monitor with 1600x1200 resolution, mouse, MS-DOS 6.2, MS-Windows 3.11, PowerBuilder 3.0a, SQL*Net 1.1, and FileNet Desktop 3.13 with LAN Workplace for DOS TCP/IP support.

The infrastructure of the trade records information management system of the present invention is broken into three main areas --image management, data management, and presentation.

The trade records information management system of the present invention utilizes two image management systems to store and display images. FileNet's information management system and Optical Storage Retrieval(OSAR) System is implemented at the regional processing center as a central area to store and retrieve images. All images in the system are stored in this location. Remote locations with robust network links can also use this image repository.

Since the image management and data management systems are separate modules, users have the option of using different management software. Two features of the trade records information management system of the present invention allow this functionality. First, the relational database has been designed to allow for multiple locations and formats of images for each document. This means that the same image can be stored in different locations, or even different image management systems. Second, the front-end application uses specific functions to retrieve images. By replacing or upgrading these functions for different sites, different image management packages can be used. Additionally, the front-end image retrieval function will allow for an escalation scheme to determine if an image that is not stored locally should be retrieved across the network.

One significant aspect of the trade records information management system of the present invention is the conversion of the database to state of the art relational database management system (RDBMS), preferably Oracle7 . The same server may be used for the relational database management system and the information management system (IMS). Larger regions may choose to split these two processes between multiple servers. In addition, it is expected that the data replication of relational database management systems, such as Oracle7, will be improved in future releases. Use of this technology will increase performance at the customer service unit and decrease inter-country network traffic.

Another significant aspect of the trade records information management system of the present invention is that data access in each application module allows the user to access the database directly, rather than through FileNet queue services. Communication between the server and client is achieved through the provision of any means for allowing a plurality of computers to exchange database data through a network, preferably Oracle's SQL*Net product over TCP/IP (i.e., Transport Control Protocol/Internet Protocol). Standard ANSI SQL should be used wherever possible to ease application maintenance and database portability.

## Claims

1. A trade records information management system for storing, searching, and retrieving data pertaining to financial transactions, comprising:
a central data storage means (118, 120) maintained at a regional processing center (116), the central data storage means (118, 120) including means for storing bit mapped images, relational database means for storing ASCII information about the bit mapped images and means for storing messages and completed inquiries;
a plurality of customer service units (136-148) that are remote from the regional processing center (116), each customer service unit (136-148) having local data storage means maintained at the customer service units, the local data storage means including means for storing bit mapped images and means for storing messages and completed inquiries;
a wide area network connecting the regional processing center (116) with each of the plurality of customer service units (136-148);
gateway means (122) located at the regional processing center (116), for linking the central data storage means (118, 120) with the local data storage means at each of the customer service units and linking the wide area network to other networks;
means for inputting data into the central data storage means (118, 120) from a plurality of sources, said means including means (134, 136) for creating and inputting bit mapped images of hard copy documents;
means (138) for indexing input data in the central data storage means (118, 120) and creating a transaction data folder (170), each transaction data folder (170) containing a unique identifier and a bit mapped image file containing the image of at least one hard copy document (134).

2. The trade records information management system of claim 1, further comprising:
means for searching the data storage means (118, 120) in response to structured queries and identifying records that match said queries.

3. The trade records information management system of claim 2, further comprising: graphic user interface means for allowing users to build said structured queries.

4. The trade records information management system of any preceding claim, further comprising: means for allowing one user to monitor another user's work-in-process at any time to monitor the backlog and assigned levels of work and means for assigning monitoring privileges to select users.

5. The trade records information management system of any preceding claim, further comprising: means for displaying data in the internal data storage (118, 120) means so as to enable the data folder (170) to be reviewed.

6. The trade records information management system of any preceding claim, further comprising: means for assigning a transaction data folder (170) to a particular user based upon a predetermined routing procedure.

7. The trade records information management system of any preceding claim, further comprising means for creating a work queue for individual users.

8. The trade records information management system of any preceding claim, further comprising means for allowing users to exchange database data through a network.

9. The trade records information management system of any preceding claim, further comprising means for maintaining an internal unique key identifier to identify each transaction data folder and document with the image transaction ID number unique to each item when available from the image management system.

10. The trade records information management system of any preceding claim, wherein transaction folders (170) can be accessed by customer service representatives (148) at any network location.

11. The trade records information management system of any preceding claim, further comprising: means for allowing users to place any documents into one or more folders (170) of the user's choice.

12. The trade records information management system of any preceding claim, further comprising: means for retrieving identified data records from the central data storage means (118, 120) in response to structured queries and replicating data records retrieved from the central data storage means (118, 120) in the local data storage means.

13. The trade records information management system of any preceding claim, further comprising:
a plurality of regional processing centers (116), each regional processing center (116) having central data storage means (118, 120) maintained at the regional processing center, the central data storage means (118, 120) including means for storing bit mapped images, relational database means for storing ASCII information about the bit mapped images and means for storing messages and completed inquiries;
a plurality of customer service units (136-148) that are associated with and remote from each of the regional processing centers (116), each customer service unit (136-148) having local data storage means maintained at the customer service units;
a wide area network connecting the plurality of regional processing centers (116) with each other and with a plurality of customer service units (136-148); and
gateway means (122) located at each of the regional processing centers (116), for linking the central data storage means (118, 120) with the local data storage means at each of the customer service units and linking the wide area network to other networks.

14. A process of storing, searching and retrieving data pertaining to financial transactions in a trade records information system, the process comprising the steps of: pre-processing (158) data including inbound paper-based documents; storing (172) bit mapped images in a local data storage means of each of a plurality of customer service units (136-148) and in a central data storage means (118, 120) of a regional processing center (116); storing information about the bit-mapped images in the central data storage means (118, 120); storing messages and completed enquiries in the central data storage means (118, 120) and in the local storage means; inputting data into the central data storage means (118, 120) from a plurality of sources; indexing input data in the central data storage means; creating a transaction data folder (170), containing a unique identifier and a bit mapped image file containing the image of at least one hard copy document (152); and connecting the regional processing center (116) with each of the plurality of customer service units (136-148).

15. The process of claim 14, further comprising the step of assigning a transaction data folder (170) to a particular user based upon predetermined routing rules.

16. The process of claim 14 or claim 15 further comprising the step of creating a queue for a particular user, the queue containing documents and inquiries for processing.

17. The process of any of claims 14 to 16, further comprising the step of monitoring document work flow for backlog and assigned work levels.

18. The process of any of claims 14 to 17, further comprising the step of connecting the regional processing center (116) with each of the plurality of customer service units (136-148) through a wide area network linking the central data storage means (118, 120) with the local data storage means at each of the customer service units and linking the wide area network to other networks to allow data communication between said data storage means and said networks.

19. The process of any of claims 14 to 18, further comprising the step of searching the data storage means in response to structured queries and identifying records that match said queries.

20. The process of any of claims 14 to 19, further comprising the step of maintaining an internal unique key identifier to identify each transaction data folder (170) and document with the image transaction ID number unique to each item when available from the image management system.

## Patentansprüche

1. Ein Informationsverwaltungssystem für Geschäftsunterlagen zum Speichern, Suchen und Abrufen von Daten, die sich auf Finanztransaktionen beziehen, das Folgendes beinhaltet:
ein zentrales Datenspeicherungsmittel (118, 120), das in einem regionalen Verarbeitungszentrum (116) unterhalten wird, wobei das zentrale Datenspeicherungsmittel (118, 120) ein Mittel zum Speichern von Rasterbildern, ein relationales Datenbankmittel zum Speichern von ASCII-Informationen zu den Rasterbildern und ein Mittel zum Speichern von Meldungen und abgeschlossenen Anfragen umfasst;
eine Vielzahl von Kundendiensteinheiten (136-148), die von dem regionalen Verarbeitungszentrum (116) entfernt liegen, wobei jede Kundendiensteinheit (136-148) ein lokales Datenspeicherungsmittel, das in den Kundendiensteinheiten unterhalten wird, aufweist, wobei das lokale Datenspeicherungsmittel ein Mittel zum Speichern von Rasterbildern und ein Mittel zum Speichern von Meldungen und abgeschlossenen Anfragen umfasst;
ein Weitverkehrsnetz, das das regionale Verarbeitungszentrum (116) an jede der Vielzahl von Kundendiensteinheiten (136-148) koppelt;
ein Netzübergangsmittel (122), das sich in dem regionalen Verarbeitungszentrum (116) befindet, um das zentrale Datenspeicherungsmittel (118, 120) mit dem lokalen Datenspeicherungsmittel in jeder der Kundendiensteinheiten zu verbinden und das Weitverkehrsnetz mit anderen Netzen zu verbinden;
ein Mittel zum Eingeben von Daten von einer Vielzahl von Quellen in das zentrale Datenspeicherungsmittel (118, 120), wobei das Mittel ein Mittel (134, 136) zum Erstellen und Eingeben von Rasterbildern von auf Papier ausgeduckten Dokumenten umfasst;
ein Mittel (138) zum Indizieren von eingegebenen Daten in dem zentralen Datenspeicherungsmittel (118, 120) und Erstellen eines Transaktionsdatenordners (170), wobei jeder Transaktionsdatenordner (170) einen eindeutigen Kennzeichner und eine Rasterbilddatei enthält, die das Bild von mindestens einem auf Papier ausgedrucktem Dokument (134) enthält.

2. Informationsverwaltungssystem für Geschäftsunterlagen gemäß Anspruch 1, das ferner Folgendes beinhaltet:
ein Mittel zum Durchsuchen des Datenspeicherungsmittels (118, 120) in Antwort auf strukturierte Abfragen und zum Identifizieren von Unterlagen, die diesen Abfragen entsprechen.

3. Informationsverwaltungssystem für Geschäftsunterlagen gemäß Anspruch 2, das ferner Folgendes beinhaltet: ein Mittel einer grafischen Benutzeroberfläche zum Ermöglichen des Zusammenerstellens der strukturierten Abfragen durch Benutzer.

4. Informationsverwaltungssystem für Geschäftsunterlagen gemäß einem der vorhergehenden Ansprüche, das ferner Folgendes beinhaltet: ein Mittel zum Ermöglichen des Überwachens der sich im Fortschritt befindenden Arbeit eines Benutzers durch einen anderen Benutzer zu einem beliebigen Zeitpunkt, um die Arbeitsrückstände und die zugewiesenen Arbeitspegel zu überwachen, und ein Mittel zum Zuweisen von Überwachungsberechtigungen an ausgewählte Benutzer.

5. Informationsverwaltungssystem für Geschäftsunterlagen gemäß einem der vorhergehenden Ansprüche, das ferner Folgendes beinhaltet: ein Mittel zum Anzeigen von Daten in dem Mittel der internen Datenspeicherung (118, 120), um die Durchsicht des Datenordners (170) zu ermöglichen.

6. Informationsverwaltungssystem für Geschäftsunterlagen gemäß einem der vorhergehenden Ansprüche, das ferner Folgendes beinhaltet: ein Mittel, um einem bestimmten Benutzer auf der Basis eines vorbestimmten Verkehrslenkungverfahrens einen Transaktionsdatenordner (170) zuzuweisen.

7. Informationsverwaltungssystem für Geschäftsunterlagen gemäß einem der vorhergehenden Ansprüche, das ferner ein Mittel zum Erstellen einer Arbeitswarteschlange für einzelne Benutzer beinhaltet.

8. Informationsverwaltungssystem für Geschäftsunterlagen gemäß einem der vorhergehenden Ansprüche, das ferner ein Mittel zum Ermöglichen des Austausches von Datenbank-Daten über ein Netz durch Benutzer beinhaltet.

9. Informationsverwaltungssystem für Geschäftsunterlagen gemäß einem der vorhergehenden Ansprüche, das ferner ein Mittel zum Unterhalten eines internen eindeutigen Schlüsselkennzeichners zum Kennzeichnen jedes Transaktionsdatenordners und Dokuments mit der Transaktionsidentifikationsnummer des Bildes, die für jedes Element eindeutig ist, wenn von dem Bildverwaltungssystem zur Verfügung gestellt, beinhaltet.

10. Informationsverwaltungssystem für Geschäftsunterlagen gemäß einem der vorhergehenden Ansprüche, wobei Kundendienstvertreter (148) an jedem Netzstandort auf Transaktionsordner (170) zugreifen können.

11. Informationsverwaltungssystem für Geschäftsunterlagen gemäß einem der vorhergehenden Ansprüche, das ferner Folgendes beinhaltet: ein Mittel, um es Benutzern zu ermöglichen, beliebige Dokumente in einem oder mehreren Ordnern (170) ihrer Wahl abzulegen.

12. Informationsverwaltungssystem für Geschäftsunterlagen gemäß einem der vorhergehenden Ansprüche, das ferner Folgendes beinhaltet: ein Mittel zum Abrufen gekennzeichneter Datensätze vom zentralen Datenspeicherungsmittel (118, 120) in Antwort auf strukturierte Abfragen und zum Nachbilden von Datensätzen, die aus dem zentralen Datenspeicherungsmittel (118, 120) abgerufen worden sind, in dem lokalen Datenspeicherungsmittel.

13. Informationsverwaltungssystem für Geschäftsunterlagen gemäß einem der vorhergehenden Ansprüche, das ferner Folgendes beinhaltet:
eine Vielzahl von regionalen Verarbeitungszentren (116), wobei jedes regionale Verarbeitungszentrum (116) ein zentrales Datenspeicherungsmittel (118, 120), das in dem regionalen Verarbeitungszentrum unterhalten wird, aufweist, wobei das zentrale Datenspeicherungsmittel (118, 120) ein Mittel zum Speichern von Rasterbildern, ein relationales Datenbankmittel zum Speichern von ASCII-Informationen zu den Rasterbildern und ein Mittel zum Speichern von Meldungen und abgeschlossenen Anfragen umfasst;
eine Vielzahl von Kundendiensteinheiten (136-148), die mit jedem der regionalen Verarbeitungszentren (116) assoziiert sind und von ihnen entfernt liegen, wobei jede Kundendiensteinheit (136-148) ein lokales Datenspeicherungsmittel, das in den Kundendiensteinheiten unterhalten wird, aufweist;
ein Weitverkehrsnetz, das die Vielzahl von regionalen Verarbeitungszentren (116) aneinander und an eine Vielzahl von Kundendiensteinheiten (136-148) koppelt; und
ein Netzübergangsmittel (122), das sich in jedem der regionalen Verarbeitungszentren (116) befindet, um das zentrale Datenspeicherungsmittel (118, 120) mit dem lokalen Datenspeicherungsmittel in jeder der Kundendiensteinheiten zu verbinden und um das Weitverkehrsnetz mit anderen Netzen zu verbinden.

14. Ein Verfahren zum Speichern, Suchen und Abrufen von Daten, die sich auf Finanztransaktionen beziehen, in einem Informationssystem für Geschäftsunterlagen, wobei das Verfahren die folgenden Schritte beinhaltet: Vorverarbeiten (158) von Daten einschließlich eingehender Papierdokumente; Speichern (172) von Rasterbildern in einem lokalen Datenspeicherungsmittel jeder einer Vielzahl von Kundendiensteinheiten (136-148) und in einem zentralen Datenspeicherungsmittel (118, 120) eines regionalen Verarbeitungszentrums (116); Speichern von Information zu den Rasterbildern in dem zentralen Datenspeicherungsmittel (118, 120); Speichern von Meldungen und abgeschlossenen Anfragen in dem zentralen Datenspeicherungsmittel (118, 120) und in dem lokalen Speicherungsmittel; Eingeben von Daten von einer Vielzahl von Quellen in das zentrale Datenspeicherungsmittel (118, 120); Indizieren von eingegebenen Daten in dem zentralen Datenspeicherungsmittel; Erstellen eines Transaktionsdatenordners (170), der einen eindeutigen Kennzeichner und eine Rasterbilddatei enthält, die das Bild von mindestens einem auf Papier ausgedruckten Dokument (152) enthält; und Koppeln des regionalen Verarbeitungszentrums (116) an jede der Vielzahl von Kundendiensteinheiten (136-148).

15. Verfahren gemäß Anspruch 14, das ferner den Schritt beinhaltet, einem bestimmten Benutzer auf der Basis vorbestimmter Verkehrslenkungsvorschriften einen Transaktionsdatenordner (170) zuzuweisen.

16. Verfahren gemäß Anspruch 14 oder Anspruch 15, das ferner den Schritt des Erstellens einer Warteschlange für einen bestimmten Benutzer beinhaltet, wobei die Warteschlange Dokumente und Anfragen zur Verarbeitung enthält.

17. Verfahren gemäß einem der Ansprüche 14 bis 16, das ferner den Schritt des Überwachens des Dokumentenarbeitsflusses hinsichtlich der Arbeitsrückstände und der zugewiesenen Arbeitspegel beinhaltet.

18. Verfahren gemäß einem der Ansprüche 14 bis 17, das ferner den Schritt des Koppelns des regionalen Verarbeitungszentrums (116) an jede der Vielzahl von Kundendiensteinheiten (136-148) über ein Weitverkehrsnetz, das das zentrale Datenspeicherungsmittel (118, 120) mit dem lokalen Datenspeicherungsmittel in jeder der Kundendiensteinheiten verbindet und das Weitverkehrsnetz mit anderen Netzen verbindet, um eine Datenübermittlung zwischen den Datenspeicherungsmitteln und den Netzen zu ermöglichen.

19. Verfahren gemäß einem der Ansprüche 14 bis 18, das ferner den Schritt des Durchsuchens des Datenspeicherungsmittels in Antwort auf strukturierte Abfragen und des Identifizierens von Unterlagen, die diesen Abfragen entsprechen, beinhaltet.

20. Verfahren gemäß einem der Ansprüche 14 bis 19, das ferner den Schritt des Unterhaltens eines internen eindeutigen Schlüsselkennzeichners zum Kennzeichnen jedes Transaktionsdatenordners (170) und Dokuments mit der Transaktionsidentifikationsnummer des Bildes, die für jedes Element eindeutig ist, wenn von dem Bildverwaltungssystem zur Verfügung gestellt, beinhaltet.

## Revendications

1. Un système de gestion d'informations d'enregistrements commerciaux destiné à stocker, rechercher et restituer des données afférentes à des transactions financières, comportant :
un moyen de stockage de données central (118, 120) maintenu à un centre de traitement régional (116), le moyen de stockage de données central (118, 120) comprenant des moyens destinés à stocker des images en mode point, des moyens formant base de données relationnelle destinés à stocker des informations ASCII à propos des images en mode point et des moyens destinés à stocker des messages et des demandes achevées ;
une pluralité d'unités de service clientèle (136 à 148) qui sont éloignées du centre de traitement régional (116), chaque unité de service clientèle (136 à 148) ayant des moyens de stockage de données locaux maintenu aux unités de service clientèle, les moyens de stockage de données locaux comprenant des moyens destinés à stocker des images en mode point et des moyens destinés à stocker des messages et des demandes achevées ;
un réseau étendu raccordant le centre de traitement régional (116) à chaque unité de la pluralité d'unités de service clientèle (136 à 148) ;
un moyen formant passerelle (122) situé au centre de traitement régional (116), destiné à relier le moyen de stockage de données central (118, 120) aux moyens de stockage de données locaux à chacune des unités de service clientèle et à relier le réseau étendu à d'autres réseaux ;
des moyens destinés à entrer des données dans le moyen de stockage de données central (118, 120) à partir d'une pluralité de sources, lesdits moyens comprenant des moyens (134, 136) destinés à créer et à entrer des images en mode point de documents papier ;
des moyens (138) destinés à indexer des données d'entrée dans le moyen de stockage de données central (118, 120) et à créer un dossier de données de transaction (170), chaque dossier de données de transaction (170) contenant un identifiant unique et un fichier d'image en mode point contenant l'image d'au moins un document papier (134).

2. Le système de gestion d'informations d'enregistrements commerciaux de la revendication 1, comportant de plus :
des moyens destinés à effectuer une recherche dans le moyen de stockage de données (118,120) en réponse à des requêtes structurées et à identifier des registres qui correspondent auxdites requêtes.

3. Le système de gestion d'informations d'enregistrements commerciaux de la revendication 2, comportant de plus : des moyens formant interface utilisateur graphique destinés à permettre à des utilisateurs de générer lesdites requêtes structurées.

4. Le système de gestion d'informations d'enregistrements commerciaux de n'importe quelle revendication précédente, comportant de plus : des moyens destinés à permettre à un utilisateur de contrôler le travail en cours d'un autre utilisateur à tout moment afin de contrôler le travail en retard et les niveaux assignés de travail et des moyens destinés à assigner des privilèges de contrôle pour sélectionner des utilisateurs.

5. Le système de gestion d'informations d'enregistrements commerciaux de n'importe quelle revendication précédente, comportant de plus : un moyen destiné à afficher des données dans le moyen de stockage de données interne (118, 120) de sorte à permettre la révision du dossier de données (170).

6. Le système de gestion d'informations d'enregistrements commerciaux de n'importe quelle revendication précédente, comportant de plus : des moyens destinés à assigner un dossier de données de transaction (170) à un utilisateur particulier sur la base d'une procédure de routage prédéterminée.

7. Le système de gestion d'informations d'enregistrements commerciaux de n'importe quelle revendication précédente, comportant de plus des moyens destinés à créer une file d'attente des travaux pour des utilisateurs individuels.

8. Le système de gestion d'informations d'enregistrements commerciaux de n'importe quelle revendication précédente, comportant de plus des moyens destinés à permettre à des utilisateurs d'échanger des données de base de données par l'intermédiaire d'un réseau.

9. Le système de gestion d'informations d'enregistrements commerciaux de n'importe quelle revendication précédente, comportant de plus des moyens destinés à maintenir un identificateur de clé unique interne pour identifier chaque document et dossier de données de transaction à l'aide du numéro ID de transaction d'image unique à chaque article lorsque disponible à partir du système de gestion d'image.

10. Le système de gestion d'enregistrements commerciaux de ventes de n'importe quelle revendication précédente, dans lequel des représentants du service clientèle (148) peuvent accéder à des dossiers de transaction (170) à n'importe quel endroit du réseau.

11. Le système de gestion d'informations d'enregistrements commerciaux de n'importe quelle revendication précédente, comportant de plus : des moyens destinés à permettre à des utilisateurs de placer n'importe quels documents dans un ou plusieurs dossiers (170) du choix de l'utilisateur.

12. Le système de gestion d'informations d'enregistrements commerciaux de n'importe quelle revendication précédente, comportant de plus : des moyens destinés à restituer des enregistrements de données identifiés à partir du moyen de stockage de données central (118, 120) en réponse à des requêtes structurées et à répliquer des enregistrements de données restitués à partir du moyen de stockage de données central (118, 120) dans les moyens de stockage de données locaux.

13. Le système de gestion d'informations d'enregistrements commerciaux de n'importe quelle revendication précédente, comportant de plus :
une pluralité de centres de traitement régionaux (116), chaque centre de traitement régional (116) ayant des moyens de stockage de données centraux (118, 120) maintenus au centre de traitement régional, les moyens de stockage de données centraux (118, 120) comprenant des moyens destinés à stocker des images en mode point, des moyens formant base de données relationnelle destinés à stocker des informations ASCII à propos des images en mode point et des moyens destinés à stocker des messages et des demandes achevées ;
une pluralité d'unités de service clientèle (136 à 148) qui sont associées à chacun des centres de traitement régionaux (116) et éloignées de ceux-ci, chaque unité de service clientèle (136 à 148) ayant des moyens de stockage de données locaux maintenus aux unités de service clientèle ;
un réseau étendu raccordant la pluralité de centres de traitement régionaux (116) les uns aux autres et à une pluralité d'unités de service clientèle (136 à 148) ; et
un moyen formant passerelle (122) situé à chacun des centres de traitement régionaux (116), destiné à relier les moyens de stockage de données centraux (118, 120) aux moyens de stockage de données locaux à chacune des unités de service clientèle et à relier le réseau étendu à d'autres réseaux.

14. Un procédé pour stocker, rechercher et restituer des données afférentes à des transactions financières dans un système d'informations d'enregistrements commerciaux, le procédé comportant les étapes : de pré-traiter (158) des données comprenant des documents à base papier entrants ; de stocker (172) des images en mode point dans un moyen de stockage de données local de chaque unité d'une pluralité d'unités de service clientèle (136 à 148) et dans un moyen de stockage de données central (118, 120) d'un centre de traitement régional (116) ; de stocker des informations à propos des images en mode point dans le moyen de stockage de données central (118, 120) ; de stocker des messages et des interrogations achevées dans le moyen de stockage de données central (118, 120) et dans le moyen de stockage local ; d'entrer des données dans le moyen de stockage de données central (118, 120) à partir d'une pluralité de sources ; d'indexer des données d'entrée dans le moyen de stockage de données central ; de créer un dossier de données de transaction (170), contenant un identificateur unique et un fichier d'image en mode point contenant l'image d'au moins un document papier (152) ; et de raccorder le centre de traitement régional (116) à chaque unité de la pluralité d'unités de service clientèle (136 à 148).

15. Le procédé de la revendication 14, comportant de plus l'étape d'assigner un dossier de données de transaction (170) à un utilisateur particulier sur la base de règles de routage prédéterminées.

16. Le procédé de la revendication 14 ou de la revendication 15 comportant de plus l'étape de créer une file d'attente pour un utilisateur particulier, la file d'attente contenant des documents et des demandes à traiter.

17. Le procédé de n'importe lesquelles des revendications 14 à 16, comportant de plus l'étape de contrôler le travail en retard et les niveaux assignés de travail dans le flux de travaux des documents.

18. Le procédé de n'importe lesquelles des revendications 14 à 17, comportant de plus l'étape de raccorder le centre de traitement régional (116) à chaque unité de la pluralité d'unités de service clientèle (136 à 148) par l'intermédiaire d'un réseau étendu reliant le moyen de stockage de données central (118, 120) aux moyens de stockage de données locaux à chacune des unités de service clientèle et reliant le réseau étendu à d'autres réseaux pour permettre la communication de données entre lesdits moyens de stockage de données et lesdits réseaux.

19. Le procédé de n'importe lesquelles des revendications 14 à 18, comportant de plus l'étape de rechercher le moyen de stockage de données en réponse à des requêtes structurées et d'identifier des registres qui correspondent auxdites requêtes.

20. Le procédé de n'importe lesquelles des revendications 14 à 19, comportant de plus l'étape de maintenir un identificateur de clé unique interne pour identifier chaque document et dossiers (170) de données de transaction à l'aide du numéro ID de transaction d'image unique à chaque article lorsque disponible à partir du système de gestion d'image.
